# FASCICULE DE BREVET EUROPEEN

(11) **EP 1 419 195 B1**
(45) Date de publication et mention de la délivrance du brevet: **21.04.2010**
(21) Numéro de dépôt: 02740742.8
(22) Date de dépôt: 21.06.2002
(51) Int. Cl.: C08K 9/12, C08K 3/36, B60C 1/00, C08L 9/00

(54) **BANDE DE ROULEMENT POUR PNEUMATIQUE RENFORCEE D'UNE SILICE A BASSE SURFACE SPECIFIQUE**
REIFENLAUFFLÄCHE VERSTÄRKT DURCH KIESELSÄURE MIT NIEDRIGER SPEZIFISCHER OBERFLÄCHE
TYRE TREAD REINFORCED WITH SILICA HAVING A LOW SPECIFIC SURFACE AREA

(30) Priorité: 28.06.2001 FR 0108784
(43) Date de publication de la demande: 19.05.2004
(73) Titulaire: Société de Technologie Michelin, 63000 Clermont-Ferrand (FR); Michelin Recherche et Technique S.A., 1763 Granges-Paccot (CH)
(72) Inventeur: DUREL, Olivier, F-63112 Blanzat (FR); RAULINE, Roland, F-63830 Durtol (FR)
(74) Mandataire: Ribière, Joel
(86) Numéro de dépôt international: PCT/EP2002/006885
(87) Numéro de publication internationale: WO 2003/002648

(56) Documents cités:
- GB-A- 1 439 247
- US-A- 5 882 617
- US-A- 5 929 156
- US-A- 5 958 127

## Description

La présente invention se rapporte aux bandes de roulement de pneumatiques, plus particulièrement aux bandes de roulement renforcées d'une charge inorganique, plus précisément de silice, et aux pneumatiques comportant de telles bandes de roulement.

Les bandes de roulement des pneumatiques doivent de manière connue obéir à de nombreuses exigences techniques, souvent antinomiques, en premier lieu présenter une haute résistance à l'usure ou abrasion et une adhérence élevée, tout en offrant au pneumatique un très bon niveau de comportement routier ("*handling*") sur véhicule automobile, nécessitant en particulier une poussée de dérive ("*drift thrust*" ou "*cornering*") élevée.

Pour obtenir les propriétés de renforcement optimales conférées par une charge dans une bande de roulement de pneumatique et ainsi une haute résistance à l'usure, on sait qu'il convient d'une manière générale que cette charge soit présente dans la matrice élastomérique sous une forme finale qui soit à la fois la plus finement divisée possible et répartie de la façon la plus homogène possible. Or, de telles conditions ne peuvent être réalisées que dans la mesure où cette charge présente une très bonne aptitude, d'une part à s'incorporer dans la matrice lors du mélange avec l'élastomère et à se désagglomérer, d'autre part à se disperser de façon homogène dans cette matrice.

De manière connue, le noir de carbone présente de telles aptitudes, ce qui n'est en général pas le cas des charges inorganiques, en particulier des silices. En effet, pour des raisons d'affinités réciproques, ces particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues ; ces interactions tendent d'autre part à augmenter la consistance à l'état cru des compositions caoutchouteuses et donc à rendre leur mise en oeuvre ("*processability*") plus difficile qu'en présence de noir de carbone.

Depuis que les économies de carburant et la nécessité de protéger l'environnement sont devenues une priorité, il s'est avéré en outre nécessaire de produire des pneumatiques ayant une résistance au roulement réduite sans pénalisation de leur résistance à l'usure.

Ceci a été rendu notamment possible grâce à l'emploi, dans les bandes de roulement de ces pneumatiques, de nouvelles compositions de caoutchouc renforcées de charges inorganiques, en particulier de silices, à haute dispersibilité capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant, ainsi qu'une adhérence améliorée sur sol mouillé, enneigé ou verglacé.

Des bandes de roulement chargées de telles silices hautement dispersibles, utilisables dans les pneumatiques à basse résistance au roulement parfois qualifiés de "Pneus Verts" pour l'économie d'énergie offerte à l'usager (*"Green Tyre concept*"), ont été abondamment décrites. On se reportera notamment aux demandes de brevet EP 501 227, EP 692 492, EP 692 493, EP 735 088, EP 767 206, EP 786 493, EP 881 252, WO99/02590, WO99/02601, WO99/02602, WO99/06480, WO00/05300, WO00/05301.

Tous ces documents de l'art antérieur enseignent la nécessité, pour obtenir une résistance à l'usure suffisante, d'utiliser des silices qui non seulement sont suffisamment dispersibles mais encore présentent une surface spécifique BET élevée, comprise entre 100 et 250 m²/g, en fait typiquement supérieure à 150 m²/g (voir en particulier demande EP 501 227 précitée). Une silice à haute surface spécifique faisant référence dans le domaine des "Pneus Verts" est en particulier la silice "Zeosil 1165 MP" (surface BET égale à environ 160 m²/g) commercialisée par la société Rhodia (voir documents précités).
GB-A-1 439 247 décrit une composition caoutchouteuse contenant 10 à 250 pce de silice dont la BET varie dans une fourchette de valeur très large de 20 et 400 m²/g et une taille moyenne des particules comprise entre 10 à 400 nm. Les compositions sont utilisiées dans un grand nombre d'applications dont les bandes de roulement et comprennent un taux de zinc supérieur à 2 pce.

L'utilisation de ces silices dispersibles à haute surface spécifique, à titre de charge renforçante, a certes réduit les difficultés de mise en oeuvre des compositions de caoutchouc les contenant, mais cette mise en oeuvre reste néanmoins délicate, plus difficile que pour des compositions chargées conventionnellement de noir de carbone.

Il est tout d'abord nécessaire d'utiliser un agent de couplage, encore appelé agent de liaison, qui a pour fonction d'assurer la connexion ou liaison entre la surface des particules (groupes silanols Si-OH) de silice et l'élastomère, tout en facilitant la dispersion de cette charge au sein de la matrice élastomérique, la haute surface spécifique préconisée pour ces silices étant justement destinée à augmenter nombre et qualité des liaisons entre la silice et l'agent de couplage, afin d'atteindre le haut niveau de renforcement escompté.

De tels agents de couplage sont bien connus de l'homme du métier, essentiellement des organosilanes ou polysiloxanes polyfonctionnels. Les plus connus sont des alkoxysilanes polysulfurés, notamment des polysulfures de bis-(alkoxylsilylalkyle) tels que les polysulfures de bis-(alkoxylsilylpropyle), tout particulièrement les tétrasulfure et disulfure de bis 3-triéthoxysilylpropyle (en abrégé TESPT et TESPD, respectivement) généralement considérés comme les produits apportant, pour des bandes de roulement chargées de silice, le meilleur compromis en terme de sécurité au grillage, de facilité de mise en oeuvre et de pouvoir renforçant. Ils sont à ce titre les agents de couplage les plus utilisés aujourd'hui dans les "Pneus Verts".

Ces alkoxysilanes polysulfurés présentent toutefois comme inconvénient connu qu'ils sont fort onéreux et doivent qui plus est être utilisés dans une quantité relativement importante, typiquement de l'ordre de 8 à 12% en poids par rapport au poids de silice, ce qui équivaut à des taux généralement compris entre 6 et 10 pce (pce = parties en poids pour cent parties d'élastomère diénique). Pour réduire ces taux d'alkoxysilanes, ont été notamment proposés des activateurs de couplage (voir demandes WO00/05300 et WO00/05301 précitées).

Un autre facteur affectant la mise en oeuvre des compositions de caoutchouc à l'état cru, comparativement à l'emploi de noir de carbone, est lié aux fortes interactions physico-chimiques susceptibles de s'établir entre ces silices renforçantes, en raison de leur haute surface réactive, et d'autres ingrédients des compositions de caoutchouc, en particulier avec le système de vulcanisation. Cet inconvénient est à l'origine d'une perte de rendement et d'une diminution de la cinétique de vulcanisation. Pour contrecarrer ces effets parasites, les taux d'agents de vulcanisation, en particulier d'accélérateurs, ont du être augmentés, d'autres types d'accélérateurs (accélérateurs secondaires) ajoutés, par rapport aux formulations conventionnelles à base de noir de carbone.

En résumé, si les bandes de roulement chargées de silices dispersibles à haute surface spécifique ont certes permis d'atteindre un compromis de propriétés, en termes de résistance au roulement, de résistance à l'usure et d'adhérence, non accessible avec un noir de carbone conventionnel pour pneumatique, un tel résultat n'a pu être obtenu qu'au prix d'une mise en oeuvre plus difficile et d'un surcoût industriel lié notamment à l'emploi de quantités relativement importantes d'agents de couplage, notamment d'alkoxysilanes polysulfurés, et d'une augmentation des taux d'agents de vulcanisation.

US-A-5 958 127 et US-A-5 882 617 se réfèrent à la préparation de silice ayant des surfaces spécifiques BET inférieures à 130 m²/g. Ces silices sont utilisées dans des compositions de caoutchouc comprenant 1.44 pce de zinc. Toutefois, la quantité de silice incorporée est inférieure à 80 pce et il n'y a pas d'application pour bandes de roulement.

Par ailleurs, US-A-5 929 156 décrit des compositions de caoutchouc comprenant de la silice dont la BET est inférieure à 130m²/g). Ces compositions caoutchouteuses sont destinées à la préparation de bandes de roulement et comprennent 80 pce de silice et une quantité supérieure à 1,5 pce de zinc.

Il était certes envisageable de pallier, au moins en partie, certaines des difficultés ci-dessus en réduisant quelque peu la surface spécifique des silices, dans un domaine compris entre 100 et 150 m²/g, pour des applications de caoutchouterie n'exigeant pas une très haute résistance à l'usure, par exemple, en ce qui concerne les bandes de roulement, pour des pneumatiques du type hiver pour lesquels la résistance à l'usure, de manière connue, ne constitue pas une performance prioritaire.

Mais les silices à plus basse surface spécifique, lors de la cuisson des bandes de roulement ou des pneumatiques les comportant, se sont révélées poser un autre inconvénient, celui d'augmenter de manière très sensible les délais nécessaires au début de la réaction de vulcanisation (délais dits d'induction), de manière jugée rédhibitoire vis-à-vis de conditions de cuisson industrielles.

Des durées de cuisson augmentées sont en particulier préjudiciables aux bandes de roulement destinées au rechapage, qu'il s'agisse de rechapage "à froid' (utilisation d'une bande de roulement précuite) ou de rechapage "à chaud" plus conventionnel (utilisation d'une bande de roulement à l'état cru) ; dans ce dernier cas, une durée de cuisson allongée, outre le fait qu'elle augmente les coûts de production, conduit de manière connue à une surcuisson (post-cuisson) du reste de l'enveloppe ("carcasse") du pneumatique usagé (déjà vulcanisé), pouvant affecter certaines performances de ce dernier.

Or, de manière inattendue, la Demanderesse a découvert lors de ses recherches que non seulement l'emploi de silices à plus faible surface spécifique n'était pas incompatible avec l'obtention d'une bande de roulement présentant une résistance à l'usure élevée, mais encore que l'inconvénient précité lié à l'allongement des délais de cuisson pouvait être pallié grâce à l'emploi, à titre d'activateur de vulcanisation, d'une quantité sensiblement réduite de zinc.

En conséquence, un premier objet de l'invention concerne une bande de roulement de pneumatique incorporant une composition élastomérique renforcée d'une charge inorganique, à base d'au moins:
(i) un élastomère diénique;
(ii) à titre de charge inorganique renforçante, plus de 80 pce d'une silice présentant les caractéristiques suivantes:
   (a) une surface spécifique BET inférieure à 130 m²/g;
   (b) une taille moyenne de particules d_{w} comprise entre 30 et 300 nm;
(iii) un agent de couplage assurant la liaison entre la charge inorganique renforçante et l'élastomère diénique;
(iv) un système de vulcanisation comportant du soufre, un accélérateur primaire de vulcanisation et, à titre d'activateur de vulcanisation, entre 0,5 et 1,5 pce de zinc.

L'invention a également pour objet l'utilisation d'une bande de roulement conforme à l'invention pour la fabrication ou le rechapage de pneumatiques, ainsi que ces pneumatiques eux-mêmes lorsqu'ils comportent une bande de roulement conforme à l'invention. Les pneumatiques de l'invention sont particulièrement destinés à équiper des véhicules aptes à rouler à haute vitesse de manière soutenue tels que des véhicules tourisme, véhicules 4x4 (à 4 roues motrices), SUV (*Sport Utility Vehicles*), deux roues (notamment motos), camionnettes, "Poids-lourds" (notamment métro, bus, engins de transport routier tels que camions, tracteurs, remorques).

Les bandes de roulement selon l'invention sont susceptibles d'être préparées par un procédé constituant un autre objet de la présente invention. Ce procédé pour préparer une bande de roulement de pneumatique vulcanisable au soufre, à compromis de performances (résistance à l'usure/résistance au roulement/adhérence) amélioré, à base d'élastomère diénique, d'une charge inorganique renforçante et d'un système de vulcanisation, comporte les étapes suivantes:
- incorporer à un élastomère diénique, au cours d'une première étape dite "non-productive", au moins :

- à titre de charge inorganique renforçante, plus de 80 pce d'une silice présentant les caractéristiques suivantes :
   (a) une surface spécifique BET inférieure à 130 m²/g;
   (b) une taille moyenne de particules d_{w} comprise entre 30 et 300 nm;
- un agent de couplage assurant la liaison entre la silice et l'élastomère diénique;
- à titre d'activateur de vulcanisation, entre 0,5 et 1,5 pce de zinc,
- en malaxant thermomécaniquement le tout, en une ou plusieurs fois, jusqu'à atteindre une température maximale comprise entre 110°C et 190°C;
- refroidir l'ensemble à une température inférieure à 100°C;
- incorporer ensuite, au cours d'une seconde étape dite "productive", du soufre et un accélérateur de vulcanisation;
- malaxer le tout jusqu'à une température maximale inférieure à 110°C;
- calandrer ou extruder la composition élastomérique ainsi obtenue sous la forme d'une bande de roulement de pneumatique.

Une alternative possible au procédé ci-dessus, également conforme à l'invention, consiste à incorporer tout ou partie de la quantité de zinc, non pas au cours de la phase non-productive mais au cours de la phase productive, en même temps que soufre et accélérateur primaire.

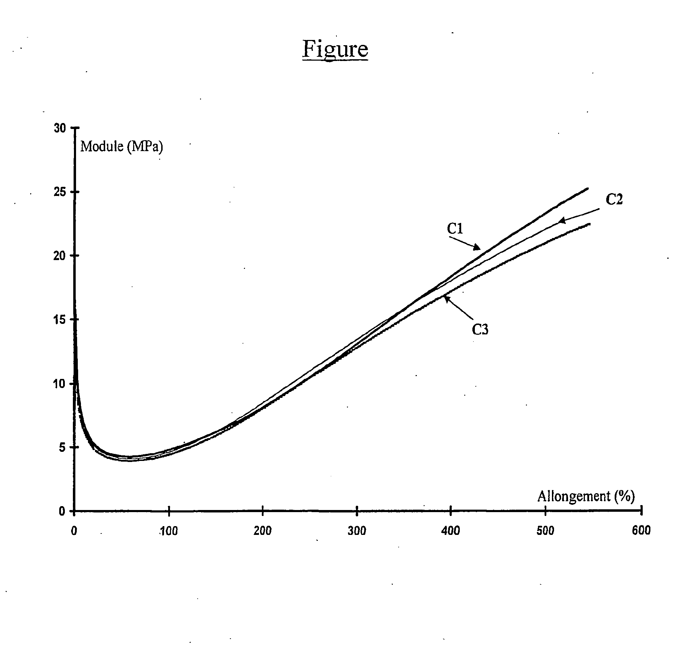

L'invention ainsi que ses avantages seront aisément compris à la lumière de la description et des exemples de réalisation qui suivent, ainsi que de la figure unique relative à ces exemples qui représente des courbes de variation de module (en MPa) en fonction de l'allongement (en %), enregistrées pour des compositions de caoutchouc destinées à des bandes de roulement de pneumatiques, conformes ou non à l'invention.

### I. MESURES ET TESTS UTILISES

### I-1. Caractérisation des silices

Les silices décrites ci-après consistent de manière connue en des agglomérats de particules, susceptibles de se désagglomérer en ces particules sous l'effet d'une force externe, par exemple sous l'action d'un travail mécanique ou d'ultrasons. Le terme "particule" utilisé dans la présente demande doit être compris dans son sens générique habituel d'agrégat (encore appelé "particule secondaire"), et non dans celui de particule élémentaire (encore appelé "particule primaire") éventuelle pouvant former, le cas échéant, une partie de cet agrégat ; par "agrégat", il faut entendre de manière connue l'ensemble insécable (i.e., qui ne peut être coupé, divisé, partagé) qui est produit lors de la synthèse de la charge, en général formé de particules élémentaires (primaires) agrégées entre elles.

Ces silices sont caractérisées comme indiqué ci-après.

### A) Surface spécifique:

La surface spécifique ("aire massique") BET est déterminée par adsorption de gaz à l'aide de la méthode de Brunauer-Emmett-Teller décrite dans "The Journal of the American Chemical Society" Vol. 60, page 309, février 1938), plus précisément selon la norme française NF ISO 9277 de décembre 1996 [méthode volumétrique multipoints (5 points) - gaz: azote - dégazage: 1heure à 160°C - domaine de pression relative *p*/*po* : 0.05 à 0.17].

La surface spécifique CTAB est la surface externe déterminée selon la norme française NF T 45-007 de novembre 1987 (méthode B).

### B) Taille moyenne des particules d_{w}:

La taille moyenne (en masse) des particules, notée d_{w}, est mesurée de manière classique après dispersion, par désagglomération aux ultrasons, de la charge à analyser dans l'eau.

La mesure est réalisée au moyen d'un sédimentomètre centrifuge à détection rayons X type "XDC" ("X-rays Disk Centrifuge"), commercialisé par la société Brookhaven Instruments, selon le mode opératoire qui suit.

On réalise une suspension de 3,2 g d'échantillon de silice à analyser dans 40 ml d'eau, par action durant 8 minutes, à 60% de puissance (60% de la position maxi du "*output control*"), d'une sonde ultrasons de 1500 W (sonificateur Vibracell 3/4 pouce commercialisé par la société Bioblock); après sonification, on introduit 15 ml de la suspension dans le disque en rotation ; après sédimentation pendant 120 minutes, la distribution en masse des tailles de particules et la taille moyenne en masse des particules d_{w} sont calculées par le logiciel du sédimentomètre "XDC" (d_{w} = Σ(nᵢ dᵢ⁵) / Σ(nᵢ dᵢ⁴) avec nᵢ nombre d'objets de la classe de taille ou diamètre dᵢ).

### C) Vitesse de désagglomération α:

La vitesse de désagglomération notée α est mesurée au moyen d'un test de désagglomération aux ultrasons, à 100% de puissance d'une sonde de 600 W (watts), fonctionnant ici en mode pulsé (soit : 1 seconde ON, 1 seconde OFF) afin d'éviter un échauffement excessif de la sonde ultrasons durant la mesure. Ce test connu, faisant notamment l'objet de la demande de brevet WO99/28376 (voir également WO99/28380, WO00/73372, WO00/73373), permet de mesurer en continu l'évolution de la taille moyenne (en volume) des agglomérats de particules durant une sonification, selon les indications ci-après.

Le montage utilisé est constitué d'un granulomètre laser (type "Mastersizer S", commercialisé par Malvem Instruments - source laser He-Ne émettant dans le rouge, longueur d'onde 632,8 nm) et de son préparateur ("Malvern Small Sample Unit MSX1"), entre lesquels a été intercalée une cellule de traitement en flux continu (Bioblock M72410) munie d'une sonde ultrasons (Sonificateur 1/2 pouce type Vibracell de 600 W commercialisé par la société Bioblock).

Une faible quantité (150 mg) de silice à analyser est introduite dans le préparateur avec 160 ml d'eau, la vitesse de circulation étant fixée à son maximum. Au moins trois mesures consécutives sont réalisées pour déterminer selon la méthode de calcul connue de Fraunhofer (matrice de calcul Malvern 3$$D) le diamètre initial moyen (en volume) des agglomérats, noté dᵥ[0]. La sonification (mode pulsé : 1 s ON, 1 s OFF) est ensuite établie à une puissance de 100% (soit 100% de la position maxi du "tip amplitude") et on suit durant 8 minutes environ l'évolution du diamètre moyen en volume dᵥ[t] en fonction du temps "t" à raison d'une mesure toutes les 10 secondes environ. Après une période d'induction (environ 3-4 minutes), il est observé que l'inverse du diamètre moyen en volume 1/dᵥ[t] varie linéairement, ou de manière sensiblement linéaire, avec le temps "t" (régime stable de désagglomération). La vitesse de désagglomération α est calculée par régression linéaire de la courbe d'évolution de 1/dᵥ[t] en fonction du temps "t", dans la zone de régime stable de désagglomération (en général, entre 4 et 8 minutes environ). Elle est exprimée en µm⁻¹/min.

La demande WO99/28376 précitée décrit en détail un dispositif de mesure utilisable pour la réalisation de ce test de désagglomération aux ultrasons. Ce dispositif, on le rappelle, consiste en un circuit fermé dans lequel peut circuler un flux d'agglomérats de particules en suspension dans un liquide. Ce dispositif comporte essentiellement un préparateur d'échantillon, un granulomètre laser et une cellule de traitement. Une mise à la pression atmosphérique, au niveau du préparateur d'échantillon et de la cellule de traitement elle-même, permet l'élimination en continu des bulles d'air qui se forment durant la sonification (action de la sonde ultrasons).

Le préparateur d'échantillon ("Malvem Small Sample Unit MSX1") est destiné à recevoir l'échantillon de silice à tester (en suspension dans le liquide 3) et à le faire circuler à travers le circuit à la vitesse préréglée (potentiomètre - vitesse maximum d'environ 3 l/min), sous la forme d'un flux de suspension liquide. Ce préparateur consiste simplement en une cuve de réception qui contient, et à travers laquelle circule, la suspension à analyser. Il est équipé d'un moteur d'agitation, à vitesse modulable, afin d'éviter une sédimentation des agglomérats de particules de la suspension ; une mini-pompe centrifuge est destinée à assurer la circulation de la suspension dans le circuit ; l'entrée du préparateur est reliée à l'air libre via une ouverture destinée à recevoir l'échantillon de charge à tester et/ou le liquide utilisé pour la suspension.

Au préparateur est connecté un granulomètre laser ("Mastersizer S") dont la fonction est de mesurer en continu, à intervalles de temps réguliers, la taille moyenne en volume "dᵥ" des agglomérats, au passage du flux, grâce à une cellule de mesure à laquelle sont couplés les moyens d'enregistrement et de calcul automatiques du granulomètre. On rappelle ici brièvement que les granulomètres laser exploitent, de manière connue, le principe de la diffraction de la lumière par des objets solides mis en suspension dans un milieu dont l'indice de réfraction est différent de celui du solide. Selon la théorie de Fraunhofer, il existe une relation entre la taille de l'objet et l'angle de diffraction de la lumière (plus l'objet est petit et plus l'angle de diffraction sera élevé). Pratiquement, il suffit de mesurer la quantité de lumière diffractée pour différents angles de diffraction pour pouvoir déterminer la distribution de taille (en volume) de l'échantillon, dᵥ correspondant à la taille moyenne en volume de cette distribution (dᵥ = Σ(nᵢ dᵢ⁴) / Σ(nᵢ dᵢ³) avec nᵢ nombre d'objets de la classe de taille ou diamètre dᵢ).

Intercalée entre le préparateur et le granulomètre laser se trouve enfin une cellule de traitement équipée d'une sonde ultrasons, pouvant fonctionner en mode continu ou pulsé, destinée à casser en continu les agglomérats de particules au passage du flux. Ce flux est thermostaté par l'intermédiaire d'un circuit de refroidissement disposé, au niveau de la cellule, dans une double enveloppe entourant la sonde, la température étant contrôlée par exemple par une sonde de température plongeant dans le liquide au niveau du préparateur.

### I-2. Caractérisation des compositions de caoutchouc

Les compositions de caoutchouc sont caractérisées, avant et après cuisson, comme indiqué ci-après.

### A) Plasticité Mooney:

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre).

### B) Temps de grillage:

Les mesures sont effectuées à 130°C, conformément à la norme française NF T 43-005 (1991). L'évolution de l'indice consistométrique en fonction du temps permet de déterminer le temps de grillage des compositions de caoutchouc, apprécié conformément à la norme précitée par le paramètre T5 (cas d'un grand rotor), exprimé en minutes, et défini comme étant le temps nécessaire pour obtenir une augmentation de l'indice consistométrique (exprimée en UM) de 5 unités au dessus de la valeur minimale mesurée pour cet indice.

### C) Rhéométrie:

Les mesures sont effectuées à 150°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983) : tᵢ est le délai d'induction, c'est-à-dire le temps nécessaire au début de la réaction de vulcanisation ; t_{α} (par exemple t₉₀ ou t₉₉) est le temps nécessaire pour atteindre une conversion de α%, c'est-à-dire α% (par exemple 90% ou 99%, respectivement) de l'écart entre les couples minimum et maximum. On mesure également la constante de vitesse de conversion notée K (exprimée en min⁻¹), d'ordre 1, calculée entre 30% et 80% de conversion, qui permet d'apprécier la cinétique de vulcanisation.

### D) Essais de traction:

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation) les modules sécants nominaux (ou contraintes apparentes, en MPa) à 10% d'allongement (notés MA10), 100% d'allongement (notés MA100) et 300% d'allongement (notés MA300). On mesure également les contraintes à la rupture (en MPa) et les allongements à la rupture (en %). Toutes ces mesures de traction sont effectuées dans les conditions normales de température (23±2°C) et d'hygrométrie (50±5% d'humidité relative), selon la norme française NF T 40-101 (décembre 1979).

Un traitement des enregistrements de traction permet également de tracer la courbe de module en fonction de l'allongement (voir figure annexée), le module utilisé ici étant le module sécant vrai mesuré en première élongation, calculé en se ramenant à la section réelle de l'éprouvette et non à la section initiale comme précédemment pour les modules nominaux.

### E) Propriétés dynamiques:

Les propriétés dynamiques ΔG* et tan(δ)ₘₐₓ sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99, ou selon les cas à une température différente. On effectue un balayage en amplitude de déformation de 0,1 à 50% (cycle aller), puis de 50% à 1% (cycle retour). Les résultats exploités sont le module complexe de cisaillement dynamique (G*) et le facteur de perte tan(δ). Pour le cycle retour, on indique la valeur maximale de tan(δ) observée, noté tan(δ)ₘₐₓ, ainsi que l'écart de module complexe (ΔG*) entre les valeurs à 0.15 et 50% de déformation (effet Paye).

### F) Dureté Shore A:

La dureté Shore A des compositions après cuisson est appréciée conformément à la norme ASTM D 2240-86.

### G) Test de "bound rubber":

Le test dit de *"bound rubber"* permet de déterminer la proportion d'élastomère, dans une composition non vulcanisée, qui est associée à la charge renforçante si intimement que cette proportion d'élastomère est insoluble dans les solvants organiques usuels. La connaissance de cette proportion insoluble de caoutchouc, liée à la charge renforçante au cours du mélangeage, donne une indication quantitative de l'activité renforçante de la charge dans la composition de caoutchouc. Une telle méthode a été décrite par exemple dans la norme française NF T 45-114 (juin 1989) appliquée à la détermination du taux d'élastomère lié au noir de carbone.

Ce test, bien connu de l'homme du métier pour caractériser la qualité de renforcement apportée par la charge renforçante, a par exemple été décrit dans les documents suivants: Plastics, Rubber and Composites Processing and Applications, Vol. 25, No7, p. 327 (1996) ; Rubber Chemistry and Technology, Vol. 69, p. 325 (1996).

Dans le cas présent, on mesure le taux d'élastomère non extractible au toluène, après un gonflement pendant 15 jours d'un échantillon de composition de caoutchouc (typiquement 300-350 mg) dans ce solvant (par exemple dans 80-100 cm³ de toluène), suivi d'une étape de séchage de 24 heures à 100°C, sous vide, avant pesée de l'échantillon de composition de caoutchouc ainsi traité. De préférence, l'étape de gonflement ci-dessus est conduite à la température ambiante (environ 20°C) et à l'abri de la lumière, et le solvant (toluène) est changé une fois, par exemple après les cinq premiers jours de gonflement.

Le taux de "bound rubber" (% en poids), noté "BR", est calculé de manière connue par différence entre le poids initial et le poids final de l'échantillon de composition de caoutchouc, après prise en compte et élimination, dans le calcul, de la fraction des composants insolubles par nature, autres que l'élastomère, présents initialement dans la composition de caoutchouc.

### I-3. Caractérisation des pneumatiques ou bandes de roulement

### A) Résistance au roulement:

La résistance au roulement est mesurée sur un volant, selon la méthode ISO 87-67 (1992). Une valeur supérieur à celle du témoin, arbitrairement fixée à 100, indique un résultat amélioré c'est-à-dire une résistance au roulement plus basse.

### B) Résistance à l'usure:

On soumet les pneumatiques à un roulage réel sur route, sur un véhicule automobile déterminé, jusqu'à ce que l'usure due au roulage atteigne les témoins d'usure disposés dans les rainures de la bande de roulement. Une valeur supérieure à celle du témoin, arbitrairement fixée à 100, indique un résultat amélioré c'est-à-dire un kilométrage parcouru supérieur.

### C) Freinage sur sol sec:

Les pneumatiques sont montés sur un véhicule automobile équipé d'un système de freinage ABS et on mesure la distance nécessaire pour passer de 100 km/h à 0 km/h lors d'un freinage brutal sur un sol sec (béton bitumineux). Une valeur supérieure à celle du témoin, arbitrairement fixée à 100, indique un résultat amélioré c'est-à-dire une distance de freinage plus courte.

### D) Freinage sur sol humide:

Les pneumatiques sont montés sur un véhicule automobile équipé d'un système de freinage ABS et on mesure la distance nécessaire pour passer de 50 km/h à 10 km/h lors d'un freinage brutal sur un sol arrosé (béton bitumineux). Une valeur supérieur à celle du témoin, arbitrairement fixée à 100, indique un résultat amélioré c'est-à-dire une distance de freinage plus courte.

### E) Adhérence sur sol humide:

Pour apprécier les performances d'adhérence sur sol humide, on analyse le comportement des pneumatiques montés sur un véhicule automobile déterminé parcourant, sous des conditions de vitesse limite, un circuit fortement virageux et arrosé de manière à maintenir le sol humide.

On mesure d'une part le temps minimal nécessaire pour parcourir la totalité du circuit ; une valeur supérieure à celle du témoin, arbitrairement fixée à 100, indique un résultat amélioré c'est-à-dire un temps de parcours plus court.

Le pilote du véhicule, professionnel, attribue d'autre part une note globale, subjective, de comportement routier du véhicule - et donc des pneumatiques - sur ce circuit virageux arrosé; une note supérieure à celle du témoin, arbitrairement fixée à 100, indique un comportement global amélioré.

### F) Poussée de dérive:

Chaque pneumatique testé est monté sur une roue de dimension adaptée et gonflé à 2,2 bars. On le fait rouler à une vitesse constante de 80 km/h sur une machine automatique appropriée (machine type "sol-plan" commercialisée par la société MTS). On fait varier la charge notée "Z", sous un angle de dérive de 1 degré, et on mesure de manière connue la rigidité ou poussée de dérive notée "D" (corrigée de la poussée à dérive nulle), en enregistrant à l'aide de capteurs l'effort transversal sur la roue en fonction de cette charge Z. La poussée de dérive indiquée dans les tableaux est la pente à l'origine de la courbe D(Z). Une augmentation de poussée de dérive est favorable au comportement routier sur sol sec.

### II. CONDITIONS DE REALISATION DE L'INVENTION

Les bandes de roulement de pneumatique conformes à l'invention sont donc formées, en tout ou partie, d'une composition de caoutchouc à base d'au moins:
(i) un élastomère diénique;
(ii) à titre de charge inorganique renforçante, plus de 80 pce d'une silice telle que décrite en détail ci-après (présentant les caractéristiques a et b);
(iii) un agent de couplage assurant la liaison entre la charge inorganique renforçante et l'élastomère diénique;
(iv) un système de vulcanisation comportant du soufre, un accélérateur primaire de vulcanisation et, à titre d'activateur de vulcanisation, entre 0,5 et 1,5 pce de zinc.

Bien entendu, par l'expression composition "à base de", il faut entendre une composition comportant le mélange et/ou le produit de réaction *in situ* des différents constituants utilisés, certains de ces constituants de base étant susceptibles de, ou destinés à réagir entre eux, au moins en partie, lors des différentes phases de fabrication des bandes de roulement et pneumatiques, en particulier au cours de leur vulcanisation.

### II-1. Elastomère diénique

Par élastomère (ou caoutchouc) "diénique", on entend de manière connue un élastomère issu au moins en partie (i.e., un homopolymère ou un copolymère) de monomères diènes c'est-à-dire de monomères porteurs de deux doubles liaisons carbone-carbone, conjuguées ou non. Par élastomère diénique "essentiellement insaturé", on entend ici un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions générales étant données, l'homme du métier du pneumatique comprendra que la présente invention est en premier lieu mise en oeuvre avec des élastomères diéniques fortement insaturés, en particulier avec :
(a) - tout homopolymère obtenu par polymérisation d'un monomère diène conjugué ayant de 4 à 12 atomes de carbone;
(b) - tout copolymère obtenu par copolymérisation d'un ou plusieurs diènes conjugués entre eux ou avec un ou plusieurs composés vinyle aromatique ayant de 8 à 20 atomes de carbone.

A titre de diènes conjugués conviennent notamment le butadiène-1,3, le 2-méthyl-1,3-butadiène, les 2,3-di-alkyl(C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinyle-aromatiques conviennent par exemple le styrène, l'ortho-, méta-, para- méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1 % et 80% en poids d'unités vinyle-aromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation.

L'élastomère diénique de la bande de roulement conforme à l'invention est de préférence constitué, en tout ou partie, plus préférentiellement à raison d'au moins 50 pce, par un élastomère fortement insaturé du type butadiénique, c'est-à-dire choisi dans le groupe des élastomères diéniques fortement insaturés constitué par les polybutadiènes (BR), les copolymères de butadiène et les mélanges de ces élastomères. Ces copolymères de butadiène sont notamment les copolymères de butadiène-styrène (SBR), les copolymères d'isoprène-butadiène (BIR), les copolymères d'isoprène-butadiène-styrène (SBIR).

A titre de d'élastomères butadiéniques préférentiels conviennent notamment les BR ayant une teneur en unités -1,2 comprise entre 4% et 80% ou ceux ayant une teneur en cis-1,4 supérieure à 80%, les SBR ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les BIR ayant une teneur en isoprène comprise entre 5% et 90% en poids et une température de transition vitreuse (("Tg" mesurée selon norme ASTM D3418-82) de -40°C à -80°C. Dans le cas des copolymères SBIR conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout SBIR ayant une Tg comprise entre -20°C et -70°C.

L'élastomère butadiénique est particulièrement choisi parmi les BR, les SBR et les mélanges de ces élastomères.

De préférence, dans le cas d'une bande de roulement de pneumatique pour véhicule tourisme, l'élastomère butadiénique est majoritairement un élastomère SBR, qu'il s'agisse d'un SBR préparé en émulsion ("ESBR") ou d'un SBR préparé en solution ("SSBR"), ou un mélange de SBR et d'un autre élastomère diénique, notamment butadiénique, par exemple d'un coupage de SBR et BR, de SBR et NR (caoutchouc naturel), de SBR et IR (polyisoprène de synthèse).

On utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg comprise entre -20°C et -55°C. Un tel copolymère SBR, de préférence un SSBR, est éventuellement utilisé en mélange avec BR possédant de préférence plus de 90% de liaisons cis-1,4.

Les compositions des bandes de roulement de l'invention peuvent contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

### II-2. Charge inorganique renforçante (silice "LS")

La bande de roulement conforme à l'invention a pour caractéristique essentielle d'être renforcée, à titre de charge inorganique, par plus de 80 pce d'une silice spécifique présentant les caractéristiques suivantes :
(a) une surface spécifique BET inférieure à 130 m²/g;
(b) une taille moyenne de particules, notée d_{w}, comprise entre 30 et 300 nm.

Cette silice spécifique, dite "LS" pour "*Low Surface*", possède tout d'abord une surface BET inhabituelle pour une application bande de roulement de pneumatique. Pour une valeur BET supérieure à 130 m²/g, en particulier supérieure à 150 m²/g, on retrouve l'inconvénient des silices usuelles à haute surface spécifique pour bandes de roulement de "Pneus Verts", à savoir d'une part une dispersibilité réduite dans la matrice caoutchouteuse et des difficultés de mise en oeuvre à l'état cru, en raison notamment d'interactions parasites avec d'autres ingrédients (par exemple le système de vulcanisation) des compositions de caoutchouc, d'autre part la nécessité d'utiliser un taux d'agent de couplage supérieur.

L'homme du métier saura définir, pour ces silices LS, la limite inférieure de BET utilisable, à la lumière de la présente description, en fonction notamment de l'application particulière visée. De manière préférentielle, les silices LS possèdent une surface BET non inférieure à 50 m²/g. Pour une valeur inférieure à 50 m²/g, les compositions de caoutchouc présentent certes une mise en oeuvre facilitée ainsi qu'une hystérèse réduite, mais on s'expose au risque d'une déchéance des propriétés à la rupture, avec une résistance à l'usure, en bande de roulement, pouvant diminuer de manière rédhibitoire. Pour toutes ces raisons, en particulier dans le cas d'une bande de roulement de pneumatique tourisme, on préfère que la surface BET soit supérieure à 70 m²/g, plus préférentiellement encore comprise dans un domaine de 100 à 125 m²/g.

Les silices LS doivent d'autre part posséder une taille d_{w} comprise entre 30 et 300 nm. Pour des tailles d_{w} trop élevées, supérieures à 300 nm, les particules se comportent comme des défauts qui localisent les contraintes et sont préjudiciables à l'usure ; des tailles d_{w} trop petites, inférieures à 30 nm, pénalisent par contre la mise en oeuvre à l'état cru et la dispersion de la silice au cours de cette mise en oeuvre.

Enfin, pour les applications où le plus haut niveau de renforcement est visé, les silices LS utilisées possèderont en outre, de manière préférentielle, une dispersibilité intrinsèque élevée, illustrée par une vitesse de désagglomération α supérieure à 5.10⁻³ µm⁻¹/min (mesurée au test de désagglomération aux ultrasons décrit au chapitre I précédent). Pour une telle vitesse de désagglomération, on a constaté que la silice LS présentait une très haute dispersibilité, c'est-à-dire que peu d'agglomérats microniques sont observés par réflexion en microscopie optique sur une coupe de composition caoutchouteuse préparée selon les règles de l'art.

Pour les différentes raisons indiquées supra, les silices LS sélectionnées vérifient de préférence au moins l'une des caractéristiques suivantes:
- une surface BET comprise entre 70 et 130 m²/g ;
- une taille de particules d_{w} comprise entre 50 et 200 nm ;
- une vitesse de désagglomération α supérieure à 5.10⁻³ µm⁻¹/min.

Plus préférentiellement encore, au moins l'une des caractéristiques suivantes est vérifiée:
- une surface BET comprise dans un domaine de 100 à 125 m²/g ;
- une taille de particules d_{w} comprise dans un domaine de 100 à 150 nm ;
- une vitesse de désagglomération α supérieure à 1.10⁻² µm⁻¹/min.

Plus préférentiellement encore, la silice présente l'ensemble des caractéristiques suivantes:
- une surface BET comprise dasn un domaine de 100 à 125 m²/g;
- une taille de particules dw comprise dans un domaine de 100 à 150 nm;
- une vitesse de désagglomération a supérieure à 1.10⁻² µm⁻¹/min.

L'état physique sous lequel peut se présenter la silice LS est indifférent, que ce soit sous forme de poudre, de microperles, de granulés, de pellets, de billes ou toute autre forme densifiée; il peut s'agir d'une silice précipitée comme d'une silice de pyrolyse. Son rapport de surface BET/CTAB est de préférence compris dans un domaine de 1,0 à 1,5, plus préférentiellement de 1,0 à 1,2.

Les silices LS peuvent avantageusement constituer la totalité de la charge inorganique renforçante, ce qui constitue le meilleur mode connu de réalisation de l'invention.

Mais, à la silice LS, pourrait être éventuellement associée une autre charge inorganique renforçante, par exemple une faible quantité d'une silice renforçante conventionnelle à plus haute surface spécifique. Par "charge inorganique renforçante", doit être entendu ici toute charge inorganique ou minérale, quelles que soient sa couleur et son origine (naturelle ou de synthèse), encore appelée charge "blanche" ou parfois charge "claire" par opposition au noir de carbone, capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique (pour bande de roulement). A titre de charge équivalente d'une telle charge inorganique renforçante, pourrait être utilisée une charge renforçante du type organique, notamment un noir de carbone, recouvert au moins en partie d'une couche inorganique (par exemple, une couche de silice), nécessitant quant à elle l'utilisation d'un agent de couplage pour assurer la liaison avec l'élastomère.

A la silice LS peut être également associé un noir de carbone conventionnel de grade pneumatique, choisi notamment parmi les noirs du type HAF, ISAF, SAF conventionnellement utilisés dans les bandes de roulement des pneumatiques (par exemple, noirs N115, N134, N234, N330, N339, N347, N375). Ce noir de carbone est alors préférentiellement utilisé en faible proportion, à un taux compris de préférence entre 2 et 20 pce, plus préférentiellement dans un domaine de 5 à 15 pce. Dans les intervalles indiqués, on bénéficie des propriétés colorantes (agent de pigmentation noire) et anti-UV des noirs de carbone, sans pénaliser par ailleurs les performances typiques apportées par la silice LS.

De manière préférentielle, le taux de silice LS est supérieur à 90 pce, plus préférentiellement compris entre 90 et 150 pce, l'optimum étant bien entendu différent selon le type de pneumatique visé.

Enfin, le taux de silice LS représente préférentiellement plus de 80%, plus préférentiellement plus de 90% en poids de la renforçante totale (charge inorganique totale plus noir de carbone, le cas échéant).

### II-3. Agent de couplage

On rappelle ici que par "agent de couplage" (charge inorganique/élastomère) on doit entendre, de manière connue, un agent apte à établir une liaison suffisante, de nature chimique et/ou physique, entre la charge inorganique et l'élastomère diénique. ; un tel agent de couplage, au moins bifonctionnel, a par exemple comme formule générale simplifiée "Y-T-X", dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;
- T représente un groupe organique divalent permettant de relier Y et X.

On rappelle que les agents de couplage ne doivent pas être confondus avec de simples agents de recouvrement de la charge inorganique qui, de manière connue, peuvent comporter la fonction "Y" active vis-à-vis de la charge inorganique mais sont dépourvus de la fonction "X" active vis-à-vis de l'élastomère diénique.

Des agents de couplage (silice/élastomère diénique), d'efficacité variable, ont été décrits dans un très grand nombre de documents et sont bien connus de l'homme du métier. On peut utiliser tout agent de couplage connu susceptible d'assurer efficacement, dans les compositions de caoutchouc diénique utilisables pour la fabrication de bandes de roulement de pneumatiques, la liaison entre une charge inorganique renforçante telle que silice et un élastomère diénique, en particulier des organosilanes ou des polyorganosiloxanes polyfonctionnels porteurs des fonctions X et Y ci-dessus.

On utilise notamment des silanes polysulfurés, dits "symétriques" ou "asymétriques" selon leur structure particulière, tels que décrits par exemple dans les brevets ou demandes de brevet FR 2 149 339, FR 2 206 330, US 3 842 111, US 3 873 489, US 3 978 103, US 3 997 581, US 4 002 594, US 4 072 701, US 4 129 585, US 5 580 919, US 5 583 245, US 5 650 457, US 5 663 358, US 5 663 395, US 5 663 396, US 5 674 932, US 5 675 014, US 5 684 171, US 5 684 172, US 5 696 197, US 5 708 053, US 5 892 085, EP 1 043 357.

Conviennent en particulier pour la mise en oeuvre de l'invention, sans que la définition ci-après soit limitative, des silanes polysulfurés symétriques répondant à la formule générale (I) suivante:
(I) Z - A - Sₙ - A - Z , dans laquelle:
   - n est un entier de 2 à 8 (de préférence de 2 à 5);
   - A est un radical hydrocarboné divalent (de préférence des groupements alkylène en C₁-C₁₈ ou des groupements arylène en C₆-C₁₂, plus particulièrement des alkylènes en C₁-C₁₀, notamment en C₁-C₄ en particulier le propylène);
   - Z répond à l'une des formules ci-après: 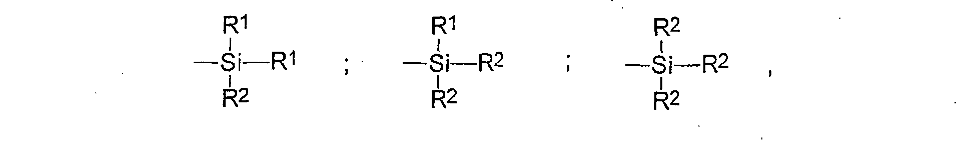
dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe hydroxyle, alkoxyle en C₁-C₁₈ ou cycloalkoxyle en C₅-C₁₈ (de préférence un groupe choisi parmi hydroxyle, alkoxyles en C₁-C₈ et cycloalkoxyles en C₅-C₈, plus préférentiellement encore un groupe choisi parmi hydroxyle et alkoxyles en C₁-C₄, en particulier méthoxyle et éthoxyle).

Dans le cas d'un mélange de silanes polysulfurés répondant à la formule (I) ci-dessus, notamment des mélanges usuels disponibles commercialement, on comprendra que la valeur moyenne des "n" est un nombre fractionnaire, de préférence compris dans un domaine de 2 à 5.

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silylalkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-tri-éthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

Le TESPD est commercialisé par exemple par la société Degussa sous la dénomination Si75 (sous forme d'un mélange de disulfure - à 75% en poids - et de polysulfures), ou encore par la société Witco sous la dénomination Silquest A1589. Le TESPT est commercialisé par exemple par la société Degussa sous la dénomination Si69 (ou X50S lorsqu'il est supporté à 50% en poids sur du noir de carbone), ou encore par la société Osi Specialties sous la dénomination Silquest A1289 (dans les deux cas, mélange commercial de polysulfures avec une valeur moyenne pour n qui est proche de 4).

L'homme du métier saura ajuster la teneur en agent de couplage dans les compositions de l'invention, en fonction de l'application visée, de la nature de l'élastomère utilisé et de la quantité de silice LS, complétée le cas échéant de toute autre charge inorganique employée à titre de charge renforçante complémentaire.

Il s'est avéré que l'utilisation d'une silice LS, dans les bandes de roulement conformes à l'invention, permet de réduire de manière sensible le taux d'agent de couplage, notamment de silane polysulfuré, par rapport aux taux usuels pratiqués en présence d'une silice conventionnelle à plus haute surface spécifique. Ainsi, dans ces bandes de roulement de l'invention, le taux d'agent de couplage, en particulier de silane polysulfuré, est de préférence inférieur à 6 pce, plus préférentiellement compris entre 2 et 6 pce. Ramené au poids de charge inorganique renforçante, en particulier de silice LS lorsque cette dernière constitue la totalité de la charge inorganique renforçante, ce taux d'agent de couplage est avantageusement inférieur à 8%, plus préférentiellement inférieur à 6% en poids par rapport au poids de charge inorganique renforçante.

L'agent de couplage utilisé pourrait être préalablement greffé (via la fonction "X") sur l'élastomère diénique de la composition de l'invention, l'élastomère ainsi fonctionnalisé ou "précouplé" comportant alors la fonction "Y" libre pour la charge inorganique renforçante. L'agent de couplage pourrait également être préalablement greffé (via la fonction "Y") sur la charge inorganique renforçante, la charge ainsi "précouplée" pouvant ensuite être liée à l'élastomère diénique par l'intermédiaire des fonctions libres "X". On préfère toutefois utiliser l'agent de couplage à, l'état libre (i.e., non greffé) ou greffé sur la charge inorganique renforçante, en particulier sur la silice LS, notamment pour des raisons de meilleure mise en oeuvre des compositions à l'état cru.

Enfin, à l'agent de couplage peut être éventuellement associé un "activateur de couplage" approprié, c'est-à-dire un corps (composé unique ou association de composés) qui, mélangé avec cet agent de couplage, augmente l'efficacité de ce dernier (voir par exemple demandes WO00/5300 et WO00/5301 précitées).

### II-4. Système de vulcanisation

Selon l'invention, le système de vulcanisation de base est constitué de soufre et d'un accélérateur primaire de vulcanisation, de préférence un accélérateur sulfénamide. A ce système de vulcanisation de base viennent s'ajouter, incorporés au cours de la première phase non-productive et/ou au cours de la phase productive, divers accélérateurs secondaires ou activateurs de vulcanisation connus.

A titre d'activateur de vulcanisation est utilisée une très faible quantité de zinc, comprise entre 0,50 et 1,5 pce, plus préférentiellement comprise dans un domaine de 0,7 à 1,3 pce.

Cette quantité de zinc spécifique peut être apportée à la composition de caoutchouc de toute manière connue de l'homme du métier, préférentiellement sous forme d'oxyde de zinc, dans ce cas utilisé par conséquent à un taux préférentiel équivalent compris entre 0,6 et 1,9 pce, plus préférentiellement compris dans un domaine de 0,9 à 1,6 pce.

A cet oxyde de zinc est associé de préférence un acide gras, plus préférentiellement l'acide stéarique, présent à un taux préférentiel de 0,5 à 3 pce, plus préférentiellement de 1 à 3 pce.

Tout ou partie du zinc utilisé peut être également incorporé aux bandes de roulement et à leurs compositions sous forme d'un sel de zinc d'acide gras, notamment sous forme de stéarate de zinc, ou encore d'un autre composé donneur de zinc actif vis-à-vis de la vulcanisation.

L'accélérateur primaire de vulcanisation est de préférence un accélérateur du type sulfénamide. L'utilisation de la silice LS permet de réduire sensiblement le taux global de soufre et d'accélérateur sulfénamide à une valeur préférentielle comprise entre 1,25 et 2,75 pcé, plus préférentiellement comprise dans un domaine de 1,5 à 2,5 pce, soufre et accélérateur sulfénamide étant par ailleurs chacun utilisés, encore plus préférentiellement, à un taux compris entre 0,5 et 1,5 pce.

Comme accélérateur secondaire de vulcanisation est utilisé préférentiellement un dérivé guanidique, en particulier la diphénylguanidine (DPG), incorporée au cours de la première phase non-productive (mode préférentiel de l'invention) et/ou au cours de la phase productive. Ce dérivé guanidique joue en outre le rôle avantageux d'agent de recouvrement de la silice LS. L'emploi de silice LS permet là encore de réduire avantageusement le taux global de soufre, sulfénamide et dérivé guanidique à une valeur préférentielle comprise dans un domaine de 1,75 à 4,25, plus préférentiellement dans un domaine de 2 à 4 pce.

### II-5. Additifs divers

Bien entendu, les compositions élastomériques des bandes de roulement conformes à l'invention comportent également tout ou partie des additifs usuels utilisés dans des compositions de caoutchouc destinées à la fabrication de bandes de roulement de pneumatique, comme par exemple des huiles d'extension, des plastifiants, des agents de protection tels que cires anti-ozone, anti-ozonants chimiques, anti-oxydants, agents anti-fatigue, des activateurs de couplage, des résines renforçantes, des accepteurs et/ou donneurs de méthylène. A la silice LS peut être également associée, si besoin est, une charge blanche conventionnelle peu ou non renforçante, par exemple des particules d'argile, bentonite, talc, craie, kaolin, utilisables par exemple dans des bandes de roulement de pneumatique colorées.

Les compositions élastomériques peuvent également contenir, en complément des agents de couplage précédemment décrits, des agents de recouvrement pour charges inorganiques, comportant par exemple la seule fonction Y, ou plus généralement des agents d'aide à la mise en oeuvre susceptibles de manière connue, grâce à une amélioration de la dispersion de la charge inorganique renforçante dans la matrice de caoutchouc et à un abaissement de la viscosité des compositions, d'améliorer leur faculté de mise en oeuvre à l'état cru ; ces agents, utilisés à un taux préférentiel compris entre 0,5 et 3 pce, sont par exemple des alkylalkoxysilanes, notamment des alkyltriéthoxysilanes, comme le 1-octyl-triéthoxysilane commercialisé par la société Degussa-Hüls sous la dénomination Dynasylan Octeo ou le 1-hexa-décyl-triéthoxysilane commercialisé par la société Degussa-Hüls sous la dénomination Si216, des polyols, des polyéthers (par exemple des polyéthylèneglycols), des amines primaires, secondaires ou tertiaires (par exemple des trialcanol-amines), des polyorganosiloxanes hydroxylés ou hydrolysables, par exemple des α,ω-dihydroxypolyorganosiloxanes (notamment des α,ω-dihydroxy-polydiméthylsiloxanes).

### II-6. Préparation des compositions et bandes de roulement

Les compositions élastomériques sont fabriquées dans des mélangeurs appropriés, en utilisant deux phases de préparation successives bien connues de l'homme du métier : une première phase de travail ou malaxage thermo-mécanique (parfois qualifiée de phase "non-productive") à haute température, jusqu'à une température maximale (notée Tₘₐₓ) comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le système de vulcanisation de base ; de telles phases ont été décrites par exemple dans les demandes EP 501 227, EP 735 088, WO00/05300 ou WO00/05301 précitées.

Le procédé de fabrication des compositions selon l'invention est **caractérisé en ce qu**'au moins la silice LS (associée ou non à une autre charge inorganique renforçante ou à un noir de carbone) et l'agent de couplage sont incorporés de manière intime, par malaxage, à l'élastomère diénique au cours de la première phase dite non-productive, c'est-à-dire que l'on introduit dans le mélangeur et que l'on malaxe thermomécaniquement, en une ou plusieurs fois, au moins ces différents constituants de base jusqu'à atteindre une température maximale comprise entre 110°C et 190°C, de préférence comprise entre 130°C et 180°C.

A titre d'exemple, la première phase (non-productive) est conduite en une seule étape thermomécanique au cours de laquelle on introduit, dans un mélangeur approprié tel qu'un mélangeur interne usuel, dans un premier temps tous les constituants de base nécessaires (élastomère diénique, charge inorganique renforçante et agent de couplage), puis dans un deuxième temps, par exemple après une à deux minutes de malaxage, les éventuels agents de recouvrement ou de mise en oeuvre complémentaires et autres additifs divers, à l'exception du système de vulcanisation de base constitué par soufre et accélérateur primaire de vulcanisation; la densité apparente de la silice LS étant généralement faible, il peut être avantageux de fractionner son introduction en deux ou plusieurs parties.

Une seconde étape (voire plusieurs) de travail thermomécanique peut être ajoutée dans ce mélangeur interne, après tombée du mélange et refroidissement intermédiaire (température de refroidissement de préférence inférieure à 100°C), dans le but de faire subir aux compositions un traitement thermomécanique complémentaire, notamment pour améliorer encore la dispersion, dans la matrice élastomérique, de la charge inorganique renforçante et de son agent de couplage. La durée totale du malaxage, dans cette phase non-productive, est de préférence comprise entre 2 et 10 minutes.

Après refroidissement du mélange ainsi obtenu, on incorpore alors soufre et accélérateur primaire, de préférence sulfénamide, à basse température, généralement dans un mélangeur externe tel qu'un mélangeur à cylindres; le tout est alors mélangé (phase productive) pendant quelques minutes, par exemple entre 5 et 15 minutes.

La composition finale ainsi obtenue est ensuite calandrée, par exemple sous la forme de plaques (épaisseur de 2 à 3 mm) ou de fines feuilles de caoutchouc pour la mesure de ses propriétés physiques ou mécaniques, notamment pour une caractérisation au laboratoire, ou encore extrudée pour former des profilés de caoutchouc utilisés directement, après découpage
ou assemblage aux dimensions souhaitées, comme bandes de roulement de pneumatiques. En résumé, le procédé pour préparer une bande de roulement de pneumatique conforme à l'invention comporte les étapes suivantes :
- incorporer à un élastomère diénique, au cours d'une première phase dite "non-productive":
   - à titre de charge inorganique renforçante renforçante, plus de 80 pce d'une silice LS présentant les caractéristiques suivantes:
      (a) une surface spécifique BET inférieure à 130 m²/g;
      (b) une taille moyenne de particules d_{w} comprise entre 30 et 300 nm;
   - un agent de couplage assurant la liaison entre la silice et l'élastomère diénique;
   - à titre d'activateur de vulcanisation, entre 0,5 et 1,5 pce de zinc,
- en malaxant thermomécaniquement le tout, en une ou plusieurs fois, jusqu'à atteindre une température maximale comprise entre 110°C et 190°C;
- refroidir l'ensemble à une température inférieure à 100°C;
- incorporer ensuite, au cours d'une seconde phase dite "productive", du soufre et un accélérateur primaire de vulcanisation;
- malaxer le tout jusqu'à une température maximale inférieure à 110°C
- calandrer ou extruder la composition élastomérique ainsi obtenue sous la forme d'une bande de roulement de pneumatique.

Une alternative possible au procédé ci-dessus, également conforme à l'invention, consiste à incorporer tout ou partie de la quantité de zinc, non pas au cours de la première phase non-productive mais au cours de la seconde phase productive, en même temps que soufre et accélérateur primaire.

La vulcanisation ou cuisson de la bande de roulement ou du pneumatique, est conduite de manière connue à une température préférentiellement comprise entre 130°C et 200°C, de préférence sous pression, pendant un temps suffisant qui peut varier par exemple entre 5 et 90 min en fonction notamment de la température de cuisson, du système de vulcanisation adopté, de la cinétique de vulcanisation de la composition considérée et de la taille du pneumatique.

Les compositions de caoutchouc précédemment décrites, à base de silice LS, constituent généralement la totalité de la bande de roulement conforme à l'invention. Mais l'invention s'applique également aux cas où ces compositions de caoutchouc forment une partie seulement d'une bande de roulement du type composite, constituée par exemple de bandes adjacentes transversalement différentes, ou encore de deux couches radialement superposées de constitutions différentes, la partie chargée de silice LS pouvant constituer par exemple, dans le second cas, la couche radialement externe de la bande de roulement destinée à entrer en contact avec le sol dès le début du roulage du pneumatique neuf, ou au contraire sa couche radialement interne destinée à entrer en contact avec le sol ultérieurement.

Il va de soi que la présente invention concerne les bandes de roulement et pneumatiques précédemment décrits tant à l'état dit "cru" (i.e., avant cuisson) qu'à l'état dit "cuit" ou vulcanisé (i.e., après vulcanisation).

### III. EXEMPLES DE REALISATION DE L'INVENTION

### III-1. Charges utilisées

Les caractéristiques des charges utilisées dans les exemples qui suivent sont résumées dans le tableau 1. La charge notée A est une silice renforçante conventionnelle à haute surface spécifique (BET d'environ 160 m²/g), charge inorganique de référence pour le renforcement des bandes de roulement des "Pneus Verts" ("Zeosil 1165MP" de la société Rhodia) ; la charge B est la silice LS à plus faible surface spécifique. Toutes deux sont des silices précipitées, se présentant sous forme de microperles, leur rapport BET/CTAB est proche de 1.

Les caractéristiques de surface BET et de taille d_{w} différencient toutefois nettement les deux charges, la charge B présentant une surface par unité de masse très sensiblement réduite (108 au lieu de 160 m²/g) et une taille de particules d_{w} près de 50% supérieure (125 nm au lieu de 85 nm). Les deux silices se caractérisent par ailleurs toutes deux par une haute dispersibilité intrinsèque, illustrée par une vitesse de désagglomération α très élevée, de l'ordre de 1,25.10⁻², µm⁻¹/min.

On note que la silice LS vérifie l'ensemble des caractéristiques préférentielles qui suivent :
- surface BET comprise dans un domaine de 100 à 125 m²/g ;
- une taille de particules d_{w} comprise dans un domaine de 100 à 150 nm ;
- une vitesse de désagglomération α supérieure à 1.10⁻² µm⁻¹/min.

### III-2. Préparation des compositions

On procède pour les essais qui suivent de la manière suivante: on introduit dans un mélangeur interne, rempli à 70% et dont la température initiale de cuve est d'environ 60°C, l'élastomère diénique (ou le mélange d'élastomères diéniques, le cas échéant), la charge renforçante, l'agent de couplage, puis, après une à deux minutes de malaxage, les divers autres ingrédients à l'exception du soufre et de l'accélérateur primaire sulfénamide. On conduit alors un travail thermomécanique (phase non-productive) en une ou deux étapes (durée totale du malaxage égale à environ 7 min), jusqu'à atteindre une température maximale de "tombée" d'environ 160-165°C.

On récupère le mélange ainsi obtenu, on le refroidit puis on ajoute soufre et accélérateur sulfénamide sur un mélangeur externe (homo-finisseur) à 30°C, en mélangeant le tout (phase productive) pendant 3 à 4 minutes.

Les compositions sont ensuite soit calandrées sous la forme de plaques (épaisseur de 2 à 3 mm) pour la mesure de leurs propriétés physiques ou mécaniques, soit extrudées directement sous la forme de bandes de roulement de pneumatique.

Dans les essais qui suivent, la silice utilisée constitue avantageusement la totalité de la charge inorganique renforçante, associée à un faible taux de noir de carbone (moins de 10 pce).

### III-3. Essais

### A) Essai 1

Cet essai a pour but de démontrer les performances globalement améliorées d'une composition élastomérique à base de silice LS, comparée à une composition témoin utilisant une silice conventionnelle (haute surface spécifique) pour bande de roulement de "Pneu Vert".

On compare pour cela trois compositions de caoutchouc butadiénique (coupage SBR/BR) destinées à la fabrication de bandes de roulement de pneumatiques tourisme:
- composition C-1 (témoin): silice A (80 pce) avec taux usuel de ZnO (2,5 pce);
- composition C-2 (témoin): silice B (94 pce) avec taux usuel de ZnO (2,5 pce);
- composition C-3 (invention): silice B (94 pce) avec taux réduit de ZnO (1,25 pce).

Les tableaux 2 et 3 donnent successivement la formulation des différentes compositions (tableau 2 - taux des différents produits exprimés en pce), leurs propriétés avant et après cuisson à 150°C pendant 40 minutes (tableau 3). La figure annexée reproduit les courbes de module (en MPa) en fonction de l'allongement (en %) ; ces courbes sont notées C1 à C3 et correspondent respectivement aux compositions C-1 à C-3.

L'élastomère butadiénique est constitué d'un SSBR comportant 25% de styrène, 58% de motifs polybutadiène 1-2 et 23 % de motifs polybutadiène 1-4 trans, auquel est associé un BR possédant plus de 90% de liaisons cis-1,4. Le taux de charge renforçante totale, constituée par la silice LS et une faible quantité de noir de carbone (moins de 10 pce), est supérieur à 100 pce dans la composition selon l'invention.

La composition C-3 destinée à la bande de roulement conforme à l'invention se caractérise d'une part par un taux très élevé de silice LS (augmenté de près de 20% par rapport à la composition témoin C-1), d'autre part par un taux nettement réduit de ZnO (diminué de moitié par rapport aux compositions témoins C-1 et C-2).

La composition C-3, comparée à la solution de référence C-1, présente par ailleurs les caractéristiques avantageuses suivantes:
- moins de 6 pce d'alkoxysilane polysulfuré (TESPT);
- un taux pondéral de ce même agent de couplage, par rapport au poids de silice, nettement réduit (moins de 6% comparé à 8%);
- un taux global de soufre et accélérateur sulfénamide également sensiblement réduit (2,5 pce au lieu de 3 pce), tout comme le taux global de soufre, accélérateur sulfénamide et dérivé guanidique (3,95 pce au lieu de 4,5 pce).

Comparées à la composition témoin C-1, les compositions à base de silice LS montrent tout d'abord (voir tableau 3):
- une viscosité à l'état cru certes équivalente mais nettement inférieure à celle qui serait observée pour la composition témoin à isotaux (94 pce) de silice conventionnelle à haute surface spécifique (dans ce dernier cas, plus de 120 UM pour la solution témoin C-1), ce qui illustre une excellente capacité de mise en oeuvre à l'état cru;
- un taux de "bound rubber" (BR) équivalent, ce qui indique déjà une très bonne liaison entre la silice LS et l'agent de couplage;
- des propriétés de renforcement après cuisson qui, de manière inattendue, sont au moins égales à celles de la solution témoin: dureté Shore équivalente, modules sous forte déformation (MA100, MA300) et rapport MA300/MA100 au moins aussi élevés, autant d'indicateurs clairs d'une haute qualité du renforcement fourni par la silice LS,
- la figure annexée confirmant bien les résultats ci-dessus avec, pour des allongements de 100% à 300%, un module équivalent pour les trois types de compositions;
- des propriétés d'hystérèse (ΔG* et tan(δ)ₘₐₓ) équivalentes.

Un commentaire particulier concerne les propriétés rhéométriques.

On note que pour la composition témoin C-2, comportant le même taux de ZnO (2,5 pce) que la composition témoin C-1, ces propriétés rhéométriques sont nettement dégradées par rapport à la solution témoin : le remplacement de la silice conventionnelle à haute surface spécifique par la silice LS se traduit par une augmentation de 30% du délai d'induction tᵢ, une augmentation de 60% du temps T5, la cinétique de cuisson (K) étant par ailleurs identique. De telles augmentations sont jugées rédhibitoires vis-à-vis des conditions de cuisson industrielle d'une bande de roulement de pneumatique.

Or, de manière inattendue, le problème ci-dessus se trouve résolu par une réduction très sensible de l'activateur de vulcanisation ZnO (1,25 pce) dans la solution conforme à l'invention, tᵢ et T5 étant même diminués, tout en conservant des valeurs acceptables du point de vue industriel, par rapport à la référence (composition C-1).

De tels résultats doivent être maintenant confrontés à des tests réels de roulage des bandes de roulement, comme exposé dans l'essai 2 qui suit.

### B) Essai 2

Les compositions C-1 et C-3 précédentes sont utilisées dans cet essai comme bandes de roulement de pneumatiques tourisme à carcasse radiale, de dimension 195/65 R15 (indice de vitesse H), conventionnellement fabriqués et en tous points identiques hormis la composition de caoutchouc constitutive de la bande de roulement : composition C-1 pour les "Pneus Verts" témoins (notés P-1), composition C-3 pour les pneus de l'invention (notés P-3).

Les pneumatiques ont d'abord été testés sur machine pour la détermination de leur résistance au roulement et de leur poussée de dérive, puis montés sur véhicule pour la suite des tests.

L'ensemble des résultats de roulage est résumé dans le tableau 4.

On constate tout d'abord que la performance en résistance au roulement des deux types de pneus est équivalente, sinon améliorée pour l'invention (+1%), synonyme d'une faible consommation de carburant pour un véhicule équipé de pneus conformes à l'invention.

On soumet ensuite les pneumatiques à un roulage sur route, sur un véhicule tourisme de marque Peugeot modèle "406", pour détermination de la résistance à l'usure. De manière connue, la résistance à l'usure de la bande de roulement, au cours du roulage du pneumatique, est directement corrélée au niveau de renforcement apporté par la charge inorganique renforçante et son agent de couplage associé. En d'autres termes, la mesure de la résistance à l'usure est un excellent indicateur, sinon le meilleur puisque évalué sur le produit manufacturé final, de la performance globale de la silice utilisée.

On constate alors que les pneumatiques selon l'invention montrent une performance identique à celle du pneumatique témoin, ce qui constitue déjà un résultat remarquable et inattendu pour l'homme du métier : une silice renforçante à plus basse surface spécifique, à condition d'être utilisée à un taux très élevé dans la bande de roulement, peut donc conduire à un compromis (résistance au roulement/résistance à l'usure) équivalent à celui que l'on ne croyait jusqu'ici disponible qu'avec des silices à plus haute surface spécifique, typiquement supérieure à 150 m²/g_{.}

On constate par ailleurs que la poussée de dérive, indicatrice pour l'homme du métier du comportement routier sur sol sec, est elle aussi maintenue au même niveau.

Les pneumatiques sont enfin montés sur un autre véhicule tourisme (marque Renault modèle "Laguna" - pressions nominales à l'avant et l'arrière) pour être soumis aux tests de freinage et d'adhérence décrits au paragraphe I-3, selon les conditions particulières qui suivent:
- freinage (sur sol sec ou humide): les pneumatiques à tester sont montés à l'avant du véhicule;
- roulage sur circuit humide virageux: les pneumatiques à tester sont montés à l'avant et à l'arrière du véhicule.

Les pneus P-3 montrent alors un gain sensible (plus 6%) en ce qui concerne le freinage sur sol mouillé. Ce premier résultat est confirmé par le test de roulage sur circuit humide et virageux montrant clairement que l'emploi de la silice LS se traduit par une amélioration sensible de l'adhérence, illustrée tant par une diminution du temps minimal nécessaire pour parcourir le circuit en conditions de vitesse limite (temps de parcours réduit de 1,5 s au tour) que par l'évolution de la note de comportement attribuée par le pilote (augmentation de 10%), ces deux variations étant très significatives pour un tel test.

Pour résumer, les pneus P-3 de l'invention montrent donc un compromis (résistance au roulement/résistance à l'usure/adhérence/comportement) qui est globalement amélioré par rapport à la référence que constituent les "Pneus Verts" témoins P-1.

Comparées aux silices à plus haute surface spécifique; les silices LS précédemment décrites présentent, grâce à leur surface spécifique réduite, de nombreux avantages :
- moins d'interactions parasites, d'une part entre les particules de silice elles-mêmes (risques réduits de ré-agglomération dans la matrice de caoutchouc), d'autre part entre les particules de silice et les autres additifs de caoutchouterie;
- amélioration globale de la dispersibilité dans la matrice diénique, lors des opérations de malaxage, c'est-à-dire de la mise en oeuvre des compositions à l'état cru;
- réduction possible des taux d'agent de couplage et d'agents de vulcanisation, en particulier de soufre et d'accélérateur sulfénamide, ce qui conduit à une diminution des coûts de la formulation.

Enfin, l'utilisation d'une très faible quantité de zinc, caractéristique nécessaire pour pallier le problème d'allongement des délais d'induction lors de la cuisson des bandes de roulement, contribue du même coup à la réduction globale des coûts industriels de ces bandes de roulement.

**Tableau 1**

| charge SiO₂ : | A | B |
|---|---|---|
| surface BET (m²/g) | 160 | 108 |
| d_{w} (nm) | 85 | 125 |

| | | |
|---|---|---|
| (A) silice "Zeosil 1165MP" de la société Rhodia (CTAB = 158 m²/g); (B) silice "Zeosil 1115MP" de la société Rhodia (CTAB = 107,5 m²/g). | | |

**Tableau 2**

| Composition N°: | C-1 | C-2 | C-3 |
|---|---|---|---|
| SBR (1) | 88.5 | 88.5 | 88.5 |
| BR (2) | 25 | 25 | 25 |
| silice A | 80 | - | - |
| silice B | - | 94 | 94 |
| noir de carbone (3) | 6.4 | 6.4 | 6.4 |
| huile aromatique (4) | 19 | 19 | 19 |
| TESPT (5) | 6.4 | 5.5 | 5.5 |
| DPG (6) | 1.5 | 1.35 | 1.35 |
| Zn (ZnO) (7) | 2.0 (2.5) | 2.0 (2.5) | 1.0 (1.25) |
| acide stéarique | 2 | 2 | 2 |
| paraffine (8) | 1.5 | 1.5 | 1.5 |
| antioxydant (9) | 2.0 | 2.0 | 2.0 |
| soufre | 1 | 1.25 | 1.25 |
| accélérateur (10) | 2 | 1.25 | 1.25 |

| | | | |
|---|---|---|---|
| (1) SSBR avec 59,5% de motifs polybutadiène 1-2 ; 26,5% de styrène ; Tg = -29°C ; 75 pce SBR sec étendu avec 18% en poids d'huile aromatique (soit un total de SSBR + huile égal à 88,5 pce); (2) BR avec 4,3 % de 1-2 ; 2,7% de trans ; 93% de cis 1-4 (Tg = -106°C); (3) noir de carbone N234; (4) huile aromatique sous forme libre ("Enerflex 65" de la société BP); (5) TESPT ("Si69" de la société Degussa); (6) diphénylguanidine ("Vulcacit D" de la société Bayer); (7) zinc sous forme d'oxyde de zinc (grade caoutchouc); (8) mélange de cires anti-ozone macro- et micro-cristallines; (9) N-1,3-diméthylbutyl-N-phényl-para-phénylènediamine ("Santoflex 6-PPD" de la société Flexsys); (10) N-cyclohexyl-2-benzothiazyl-sulfénamide (société Flexsys: "Santocure CBS"). | | | |

**Tableau 3**

| Composition N°: | C-1 | C-2 | C-3 |
|---|---|---|---|
| *Propriétés avant cuisson:* | | | |
| Mooney (UM) | 98 | 95 | 97 |
| BR (%) | 47 | 45.2 | 48 |
| tᵢ (min) | 7.9 | 10.2 | 6.6 |
| T5 (min) | 16 | 26 | 13 |
| K (min⁻¹) | 0.138 | 0.133 | 0.135 |
| *Propriétés après cuisson:* | | | |
| dureté Shore | 69.1 | 68.9 | 69.3 |
| MA10 (MPa) | 6.03 | 5.89 | 6.04 |
| MA100 (MPa) | 1.98 | 1.92 | 1.94 |
| MA300 (MPa) | 2.18 | 2.27 | 2.31 |
| MA300/MA100 | 1.10 | 1.18 | 1.19 |
| ΔG* (40°C) | 5.4 | 5.5 | 5.3 |
| tan (δ)ₘₐₓ (40°C) | 0.297 | 0.306 | 0.303 |
| contrainte rupture (MPa) | 20.5 | 19.1 | 19.5 |
| allongement rupture (%) | 530 | 540 | 535 |

**Tableau 4**

| Propriétés (en unités relatives) | P-1 | P-3 |
|---|---|---|
| Résistance au roulement : | 100 | 101 |
| Résistance à l'usure : | 100 | 100 |
| Poussée de dérive : | 100 | 100 |
| Freinage sur sol sec : | 100 | 100 |
| Freinage sur sol humide : | 100 | 106 |
| Performance en circuit humide et virageux : | | |
| - temps de parcours : | 100 | 101.5 |
| - note de comportement : | 100 | 110 |

| | | |
|---|---|---|
| (une valeur supérieure à 100 indique une performance améliorée par rapport au témoin - base 100) | | |

## Revendications

1. Bande de roulement de pneumatique incorporant une composition élastomérique renforcée d'une charge inorganique, à base d'au moins (pce = parties en poids pour cent parties d'élastomère diénique):
(i) un élastomère diénique;
(ii) à titre de charge inorganique renforçante, plus de 80 pce d'une silice présentant les caractéristiques suivantes :
(a) une surface spécifique BET inférieure à 130 m²/g;
(b) une taille moyenne de particules d_{w} comprise entre 30 et 300 nm;
(iii) un agent de couplage assurant la liaison entre la charge inorganique renforçante et l'élastomère diénique;
(iv) un système de vulcanisation comportant du soufre, un accélérateur de vulcanisation et, à titre d'activateur de vulcanisation, entre 0,5 et 1,5 pce de zinc.

2. Bande de roulement selon la revendication 1, l'élastomère diénique comportant au moins 50 pce d'un élastomère butadiénique.

3. Bande de roulement selon la revendication 2, l'élastomère butadiénique étant choisi parmi les polybutadiènes (BR), les copolymères de styrène-butadiène (SBR) et les mélanges de ces élastomères.

4. Bande de roulement selon l'une quelconque des revendications 1 à 3, le taux de silice étant supérieur à 90 pce.

5. Bande de roulement selon la revendication 4, le taux de silice étant compris entre 90 pce et 150 pce.

6. Bande de roulement selon l'une quelconque des revendications 1 à 5, l'accélérateur étant un accélérateur sulfénamide et le taux global de soufre et d'accélérateur sulfénamide étant compris entre 1,25 et 2,75 pce.

7. Bande de roulement selon la revendication 6, le taux global de soufre et d'accélérateur sulfénamide étant compris dans un domaine de 1,5 à 2,5 pce.

8. Bande de roulement selon l'une quelconque des revendications 1 à 7, le système de vulcanisation comportant en outre un dérivé guanidique, le taux global de soufre, de sulfénamide et de dérivé guanidique étant compris dans un domaine de 1,75 à 4,25 pce.

9. Bande de roulement selon la revendication 8, le dérivé guanidique étant la DPG (diphénylguanidine).

10. Bande de roulement selon l'une quelconque des revendications 1 à 9, le zinc étant apporté sous forme d'oxyde de zinc, de préférence en présence d'un acide gras.

11. Bande de roulement selon la revendication 10, l'acide gras étant l'acide stéarique, présent à un taux préférentiel de 0,5 à 3 pce.

12. Bande de roulement selon l'une quelconque des revendications 1 à 11, la quantité de zinc étant comprise dans un domaine de 0,7 à 1,3 pce.

13. Bande de roulement selon l'une quelconque des revendications 1 à 12, l'agent de couplage étant choisi parmi les silanes et polysiloxanes polyfonctionnels.

14. Bande de roulement selon la revendication 13, l'agent de couplage étant un alkoxysilane polysulfuré.

15. Bande de roulement selon la revendication 14, la quantité d'alkoxysilane polysulfuré étant inférieure à 6 pce.

16. Bande de roulement selon l'une quelconque des revendications 1 à 15, comportant en outre du noir de carbone.

17. Bande de roulement selon la revendication 16, le noir de carbone étant présent à un taux compris dans un domaine de 5 à 15 pce.

18. Bande de roulement selon l'une quelconque des revendications 1 à 17, la silice présentant au moins l'une des caractéristiques suivantes :
- une surface BET comprise entre 70 et 130 m²/g ;
- une taille de particules d_{w} comprise entre 50 et 200 nm ;
- une vitesse de désagglomération α supérieure à 5.10⁻³ µm⁻¹/min.

19. Bande de roulement selon la revendication 18, la silice présentant au moins l'une des caractéristiques suivantes:
- une surface BET comprise dans un domaine de 100 à 125 m²/g ;
- une taille de particules d_{w} comprise dans un domaine de 100 à 150 nm;
- une vitesse de désagglomération α supérieure à 1.10⁻² µm⁻¹/min.

20. Bande de roulement selon la revendication 19, la silice présentant l'ensemble des caractéristiques suivantes :
- une surface BET comprise dans un domaine de 100 à 125 m²/g ;
- une taille de particules d_{w} comprise dans un domaine de 100 à 150 nm ;
- une vitesse de désagglomération α supérieure à 1.10⁻² µm⁻¹/min.

21. Bande de roulement selon l'une quelconque des revendications 2 à 20, l'élastomère butadiénique constituant la totalité de l'élastomère diénique.

22. Bande de roulement selon l'une quelconque des revendications 2 à 21, l'élastomère butadiénique comportant, de préférence majoritairement, un élastomère SBR.

23. Bande de roulement selon la revendication 22, l'élastomère SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une température de transition vitreuse comprise entre -20°C et -55°C.

24. Bande de roulement selon les revendications 22 ou 23, le SBR étant un SBR préparé en solution (SSBR).

25. Bande de roulement selon l'une quelconque des revendications 22 à 24, le SBR étant utilisé en mélange avec un élastomère BR.

26. Bande de roulement selon la revendication 25, l'élastomère BR possédant plus de 90% de liaisons cis-1,4.

27. Bande de roulement selon l'une quelconque des revendications 1 à 26, **caractérisée en ce qu'**elle se trouve à l'état vulcanisé.

28. Procédé pour préparer une bande de roulement de pneumatique vulcanisable au soufre, ayant un compromis de performances (résistance à l'usure/résistance au roulement/adhérence) amélioré, à base d'élastomère diénique, d'une charge inorganique renforçante et d'un système de vulcanisation, ce procédé comportant les étapes suivantes (pce = parties en poids pour cent d'élastomère diénique):
• incorporer à un élastomère diénique, au cours d'une première phase dite "non-productive", au moins :
• à titre de charge inorganique renforçante renforçante, plus de 80 pce d'une silice présentant les caractéristiques suivantes :
(a) une surface spécifique BET inférieure à 130 m²/g;
(b) une taille moyenne de particules d_{w} comprise entre 30 et 300 nm;
• un agent de couplage assurant la liaison entre la silice et l'élastomère diénique;
• à titre d'activateur de vulcanisation, entre 0,5 et 1,5 pce de zinc,
• en malaxant thermomécaniquement le tout, en une ou plusieurs fois, jusqu'à atteindre une température maximale comprise entre 110°C et 190°C;
• refroidir l'ensemble à une température inférieure à 100°C;
• incorporer ensuite, au cours d'une seconde phase dite "productive", du soufre et un accélérateur de vulcanisation;
• malaxer le tout jusqu'à une température maximale inférieure à 110°C;
• calandrer ou extruder la composition élastomérique ainsi obtenue sous la forme d'une bande de roulement de pneumatique.

29. Procédé selon la revendication 28, **caractérisé en ce que** tout ou partie de la quantité de zinc est introduite au cours de la phase productive, au lieu d'être introduite au cours de la phase non-productive.

30. Procédé selon les revendications 28 ou 29, l'élastomère diénique comportant au moins 50 pce d'un élastomère butadiénique.

31. Procédé selon la revendication 30, l'élastomère butadiénique étant choisi parmi les polybutadiènes (BR), les copolymères de styrène-butadiène (SBR) et les mélanges de ces élastomères.

32. Procédé selon l'une quelconque des revendications 28 à 31, le taux de silice étant supérieur à 90 pce.

33. Procédé selon la revendication 32, le taux de silice étant compris entre 90 pce et 150 pce.

34. Procédé selon l'une quelconque des revendications 28 à 33, l'accélérateur étant un accélérateur sulfénamide et le taux global de soufre et d'accélérateur sulfénamide étant compris entre 1,25 à 2,75 pce.

35. Procédé selon la revendication 34, le taux global de soufre et d'accélérateur sulfénamide étant compris dans un domaine de 1,5 à 2,5 pce.

36. Procédé selon l'une quelconque des revendications 28 à 35, un dérivé guanidique étant en outre incorporé, le taux global de soufre, de sulfénamide et de dérivé guanidique étant compris dans un domaine de 1,75 à 4,25 pce.

37. Procédé selon la revendication 36, le dérivé guanidique étant incorporé au cours de la phase non-productive.

38. Procédé selon la revendication 37, le dérivé guanidique étant la DPG (diphénylguanidine).

39. Procédé selon l'une quelconque des revendications 28 à 38, le zinc étant apporté sous forme d'oxyde de zinc, de préférence en présence d'un acide gras.

40. Procédé selon la revendication 39, l'acide gras étant l'acide stéarique, présent à un taux préférentiel de 0,5 à 3 pce.

41. Procédé selon l'une quelconque des revendications 28 à 40, la quantité de zinc étant comprise dans un domaine de 0,7 à 1,3 pce.

42. Procédé selon l'une quelconque des revendications 28 à 41, l'agent de couplage étant choisi parmi les silanes et polysiloxanes polyfonctionnels.

43. Procédé selon la revendication 42, l'agent de couplage étant un alkoxysilane polysulfuré.

44. Procédé selon la revendication 43, la quantité d'alkoxysilane polysulfuré étant inférieure à 6 pce.

45. Procédé selon l'une quelconque des revendications 28 à 44, du noir de carbone étant en outre incorporé au cours de la phase non-productive.

46. Procédé selon la revendication 45, le taux de noir de carbone étant compris dans un domaine de 5 à 15 pce.

47. Procédé selon l'une quelconque des revendications 28 à 46, la silice présentant au moins l'une des caractéristiques suivantes :
- une surface BET comprise entre 70 et 130 m²/g ;
- une taille de particules d_{w} comprise entre 50 et 200 nm ;
- une vitesse de désagglomération α supérieure à 5.10⁻³ µm⁻¹/min.

48. Procédé selon la revendication 47, la silice présentant au moins l'une des caractéristiques suivantes:
- une surface BET comprise dans un domaine de 100 à 125 m²/g ;
- une taille de particules d_{w} comprise dans un domaine de 100 à 150 nm;
- une vitesse de désagglomération α supérieure à 1.10⁻² µm⁻¹/min.

49. Procédé selon la revendication 48, la silice présentant l'ensemble des caractéristiques suivantes :
- une surface BET comprise dans un domaine de 100 à 125 m²/g ;
- une taille de particules d_{w} comprise dans un domaine de 100 à 150 nm ;
- une vitesse de désagglomération α supérieure à 1.10⁻² µm⁻¹/min.

50. Utilisation d'une bande de roulement conforme à l'une quelconque des revendications 1 à 27 pour la fabrication ou le rechapage de pneumatiques.

51. Pneumatique comportant une bande de roulement selon l'une quelconque des revendications 1 à 27.

## Claims

1. A tyre tread incorporating an elastomeric composition reinforced with an inorganic filler, based on at least (phr = parts by weight per hundred parts of diene elastomer):
(i) a diene elastomer;
(ii) as reinforcing inorganic filler, more than 80 phr of a silica having the following characteristics:
(a) a BET specific surface area of less than 130 m²/g;
(b) an average particle size, d_{w}, of between 30 and 300 nm;
(iii) a coupling agent providing the bond between the reinforcing inorganic filler and the diene elastomer;
(iv) a vulcanisation system comprising sulphur, a vulcanisation accelerator and between 0.5 and 1.5 phr of zinc as vulcanisation activator.

2. A tread according to Claim 1, the diene elastomer comprising at least 50 phr of a butadiene elastomer.

3. A tread according to Claim 2, the butadiene elastomer being selected from among polybutadienes (BR), styrene-butadiene copolymers (SBR) and mixtures of these elastomers.

4. A tread according to any one of Claims 1 to 3, the amount of silica being greater than 90 phr.

5. A tread according to Claim 4, the amount of silica being between 90 and 150 phr.

6. A tread according to any one of Claims 1 to 5, the accelerator being a sulphenamide accelerator and the overall amount of sulphur and sulphenamide accelerator being between 1.25 and 2.75 phr.

7. A tread according to Claim 6, the overall amount of sulphur and sulphenamide accelerator being within a range from 1.5 to 2.5 phr.

8. A tread according to any one of Claims 1 to 7, the vulcanisation system furthermore comprising a guanidine derivative, the overall amount of sulphur, sulphenamide and guanidine derivative being within a range from 1.75 to 4.25 phr.

9. A tread according to Claim 8, the guanidine derivative being DPG (diphenylguanidine).

10. A tread according to any one of Claims 1 to 9, the zinc being supplied in the form of zinc oxide, preferably in the presence of a fatty acid.

11. A tread according to Claim 10, the fatty acid being stearic acid, present in a preferred amount of 0.5 to 3 phr.

12. A tread according to any one of Claims 1 to 11, the quantity of zinc being within a range from 0.7 to 1.3 phr.

13. A tread according to any one of Claims 1 to 12, the coupling agent being selected from among polyfunctional silanes and polysiloxanes.

14. A tread according to Claim 13, the coupling agent being a polysulphurised alkoxysilane.

15. A tread according to Claim 14, the quantity of polysulphurised silane being less than 6 phr.

16. A tread according to any one of Claims 1 to 15, furthermore comprising carbon black.

17. A tread according to Claim 16, the carbon black being present in an amount within a range from 5 to 15 phr.

18. A tread according to any one of Claims 1 to 17, the silica having at least one of the following characteristics:
- a BET surface area of between 70 and 130 m²/g;
- a particle size d_{w} of between 50 and 200 nm;
- a disagglomeration rate α greater than 5x10⁻³ µm⁻¹/min.

19. A tread according to Claim 18, the silica having at least one of the following characteristics:
- a BET surface area within a range from 100 to 125 m²/g;
- a particle size d_{w} within a range from 100 to 150 nm;
- a disagglomeration rate α greater than 1x10⁻² µm⁻¹/min.

20. A tread according to Claim 19, the silica having all of the following characteristics:
- a BET surface area within a range from 100 to 125 m²/g;
- a particle size d_{w} within a range from 100 to 150 nm;
- a disagglomeration rate α greater than 1x10⁻² µm⁻¹/min.

21. A tread according to any one of Claims 2 to 20, the butadiene elastomer constituting the entire diene elastomer.

22. A tread according to any one of Claims 2 to 21, the butadiene elastomer comprising, preferably in a majority proportion, an SBR elastomer.

23. A tread according to Claim 22, the SBR elastomer having a styrene content of between 20% and 30% by weight, a content of vinyl bonds of the butadiene fraction of between 15% and 65%, a content of trans-1,4 bonds of between 15% and 75% and a glass transition temperature of between -20°C and -55°C.

24. A tread according to Claims 22 or 23, the SBR being an SBR prepared in solution (SSBR).

25. A tread according to any one of Claims 22 to 24, the SBR being used in a mixture with a BR elastomer.

26. A tread according to Claim 25, the BR elastomer having more than 90% of cis-1,4 bonds.

27. A tread according to any one of Claims 1 to 26, **characterised in that** it is in the vulcanised state.

28. A process for preparing a sulphur-vulcanisable tyre tread, having an improved compromise of (wear resistance/rolling resistance/grip) performances, based on diene elastomer, a reinforcing inorganic filler and a vulcanisation system, this process comprising the following steps (phr = parts by weight per hundred of diene elastomer):
• incorporating in a diene elastomer, during a first phase referred to as "non-productive", at least:
• as reinforcing inorganic filler, more than 80 phr of a silica having the following characteristics:
(a) a BET specific surface area of less than 130 m²/g;
(b) an average particle size, d_{w}, of between 30 and 300 nm;
• a coupling agent providing the bond between the silica and the diene elastomer;
• as vulcanisation activator, between 0.5 and 1.5 phr of zinc,
• thermomechanically kneading the entire mixture, in one or more stages, until a maximum temperature of between 110°C and 190°C is reached;
• cooling the entire mixture to a temperature of less than 100°C;
• then incorporating, during a second phase referred to as "productive", sulphur and a vulcanisation accelerator;
• kneading the entire mixture until a maximum temperature less than 110°C is reached;
• calendering or extruding the elastomeric composition thus obtained in the form of a tyre tread.

29. A process according to Claim 28, **characterised in that** all or part of the quantity of zinc is introduced during the productive phase, instead of being introduced during the non-productive phase.

30. A process according to Claims 28 or 29, the diene elastomer comprising at least 50 phr of a butadiene elastomer.

31. A process according to Claim 30, the butadiene elastomer being selected from among polybutadienes (BR), styrene-butadiene copolymers (SBR) and mixtures of these elastomers.

32. A process according to any one of Claims 28 to 31, the amount of silica being greater than 90 phr.

33. A process according to Claim 32, the amount of silica being of between 90 phr and 150 phr.

34. A process according to any one of Claims 28 to 33, the accelerator being a sulphenamide accelerator and the overall amount of sulphur and sulphenamide accelerator being between 1.25 and 2.75 phr.

35. A process according to Claim 34, the overall amount of sulphur and sulphenamide accelerator being within a range from 1.5 to 2.5 phr.

36. A process according to any one of Claims 28 to 35, a guanidine derivative being furthermore incorporated, the overall amount of sulphur, sulphenamide and guanidine derivative being within a range from 1.75 to 4.25 phr.

37. A process according to Claim 36, the guanidine derivative being incorporated during the non-productive phase.

38. A process according to Claim 37, the guanidine derivative being DPG (diphenylguanidine).

39. A process according to any one of Claims 28 to 38, the zinc being supplied in the form of zinc oxide, preferably in the presence of a fatty acid.

40. A process according to Claim 39, the fatty acid being stearic acid, present in a preferred amount of 0.5 to 3 phr.

41. A process according to any one of Claims 28 to 40, the quantity of zinc being within a range from 0.7 to 1.3 phr.

42. A process according to any one of Claims 28 to 41, the coupling agent being selected from among polyfunctional silanes and polysiloxanes.

43. A process according to Claim 42, the coupling agent being a polysulphurised alkoxysilane.

44. A process according to Claim 43, the quantity of polysulphurised alkoxysilane being less than 6 phr.

45. A process according to any one of Claims 28 to 44, carbon black furthermore being incorporated during the non-productive phase.

46. A process according to Claim 45, the carbon black being within a range from 5 to 15 phr.

47. A process according to any one of Claims 28 to 46, the silica having at least one of the following characteristics:
- a BET surface area of between 70 and 130 m²/g;
- a particle size d_{w} of between 50 and 200 nm;
- a disagglomeration rate α greater than 5x10⁻³ µm⁻¹/min.

48. A process according to Claim 47, the silica having at least one of the following characteristics:
- a BET surface area within a range from 100 to 125 m²/g;
- a particle size d_{w} within a range from 100 to 150 nm;
- a disagglomeration rate α greater than 1x10⁻² µm⁻¹/min.

49. A process according to Claim 48, the silica having all of the following characteristics:
- a BET surface area within a range from 100 to 125 m²/g;
- a particle size d_{w} within a range from 100 to 150 nm;
- a disagglomeration rate α greater than 1x10⁻² µm⁻¹/min.

50. The use of a tread according to any one of Claims 1 to 27 for the manufacture or recapping of tyres.

51. A tyre comprising a tread according to any one of Claims 1 to 27.

## Patentansprüche

1. Reifenlauffläche, umfassend eine elastomere Zusammensetzung, die durch einen anorganischen Füllstoff verstärkt ist, auf der Basis von mindestens (pce = Gewichtsanteile auf hundert Anteile Dienelastomer):
(i) einem Dienelastomer;
(ii) als einem verstärkenden anorganischen Füllstoff, über 80 pce eines Siliciumdioxids, das die folgenden Merkmale aufweist:
(a) eine spezifische BET-Oberfläche, die kleiner als 130 m²/g ist;
(b) eine mittlere Teilchengröße d_{w}, die zwischen 30 und 300 nm liegt;
(iii) einem Kupplungsmittel, das die Bindung zwischen dem verstärkenden anorganischen Füllstoff und dem Dienelastomer gewährleistet;
(iv) einem Vulkanisationssystem, welches Schwefel, einen Vulkanisationsbeschleuniger und, als Vulkanisationsaktivator, zwischen 0,5 und 1,5 pce Zink enthält.

2. Lauffläche nach Anspruch 1, wobei das Dienelastomer mindestens 50 pce eines Butadien-Elastomers enthält.

3. Lauffläche nach Anspruch 2, wobei das Butadien-Elastomer aus den Polybutadienen (BR), den StyrolButadien-Copolymeren (SBR) und den Mischungen dieser Elastomere ausgewählt ist.

4. Lauffläche nach einem der Ansprüche 1 bis 3, wobei der Anteil von Siliciumdioxid größer als 90 pce ist.

5. Lauffläche nach Anspruch 4, wobei der Anteil von Siliciumdioxid zwischen 90 pce und 150 pce liegt.

6. Lauffläche nach einem der Ansprüche 1 bis 5, wobei der Beschleuniger ein Sulfenamid-Beschleuniger ist und der Gesamtanteil von Schwefel und von Sulfenamid-Beschleuniger zwischen 1,25 pce und 2,75 pce liegt.

7. Lauffläche nach Anspruch 6, wobei der Gesamtanteil von Schwefel und von Sulfenamid-Beschleuniger in einem Bereich von 1,5 bis 2,5 pce liegt.

8. Lauffläche nach einem der Ansprüche 1 bis 7, wobei das Vulkanisationssystem außerdem ein Guanidinderivat enthält, wobei der Gesamtanteil von Schwefel, von Sulfenamid und von Guanidinderivat in einem Bereich von 1,75 bis 4,25 pce liegt.

9. Lauffläche nach Anspruch 8, wobei das Guanidinderivat DPG (Diphenylguanidin) ist.

10. Lauffläche nach einem der Ansprüche 1 bis 9, wobei das Zink in Form von Zinkoxid zugeführt wird, vorzugsweise in Gegenwart einer Fettsäure.

11. Lauffläche nach Anspruch 10, wobei die Fettsäure Stearinsäure ist, die einen bevorzugten Anteil von 0,5 bis 3 pce aufweist.

12. Lauffläche nach einem der Ansprüche 1 bis 11, wobei die Menge an Zink in einem Bereich von 0,7 bis 1,3 pce liegt.

13. Lauffläche nach einem der Ansprüche 1 bis 12, wobei das Kupplungsmittel aus den polyfunktionalen Silanen und Polysiloxanen ausgewählt ist.

14. Lauffläche nach Anspruch 13, wobei das Kupplungsmittel ein polysulfuriertes Alkoxysilan ist.

15. Lauffläche nach Anspruch 14, wobei die Menge an polysulfuriertem Alkoxysilan kleiner als 6 pce ist.

16. Lauffläche nach einem der Ansprüche 1 bis 15, welche außerdem Ruß enthält.

17. Lauffläche nach Anspruch 16, wobei der Ruß in einem Anteil vorhanden ist, der in einem Bereich von 5 bis 15 pce liegt.

18. Lauffläche nach einem der Ansprüche 1 bis 17, wobei das Siliciumdioxid mindestens eines der folgenden Merkmale aufweist:
- eine BET-Oberfläche, die zwischen 70 und 130 m²/g liegt;
- eine Teilchengröße d_{w}, die zwischen 50 und 200 nm liegt;
- eine Desagglomerationsgeschwindigkeit α, die größer als 5.10⁻³ µm⁻¹/min ist.

19. Lauffläche nach Anspruch 18, wobei das Siliciumdioxid mindestens eines der folgenden Merkmale aufweist:
- eine BET-Oberfläche, die zwischen 100 und 125 m²/g liegt;
- eine Teilchengröße d_{w}, die in einem Bereich von 100 bis 150 nm liegt;
- eine Desagglomerationsgeschwindigkeit α, die größer als 1.10⁻² µm⁻¹/min ist.

20. Lauffläche nach Anspruch 19, wobei das Siliciumdioxid die Gesamtheit der folgenden Merkmale aufweist:
- eine BET-Oberfläche, die in einem Bereich von 100 und 125 m²/g liegt;
- eine Teilchengröße d_{w}, die in einem Bereich von 100 bis 150 nm liegt;
- eine Desagglomerationsgeschwindigkeit α, die größer als 1.10⁻² µm⁻¹/min ist.

21. Lauffläche nach einem der Ansprüche 2 bis 20, wobei das Butadien-Elastomer die Gesamtheit des Dienelastomers bildet.

22. Lauffläche nach einem der Ansprüche 2 bis 21, wobei das Butadien-Elastomer, vorzugsweise überwiegend, ein SBR-Elastomer ist.

23. Lauffläche nach Anspruch 22, wobei das SBR-Elastomer einen Gehalt an Styrol, der zwischen 20 und 30 Gew.-% liegt, einen Gehalt an Vinylbindungen des Butadienanteils, der zwischen 15% und 65% liegt, einen Gehalt an Trans-1,4-Bindungen, der zwischen 15% und 75% liegt, und eine Glasübergangstemperatur, die zwischen
- 20°C und -55°C liegt, aufweist.

24. Lauffläche nach Anspruch 22 oder 23, wobei der SBR ein SBR ist, der nach dem Lösungspolymerisationsverfahren hergestellt ist (SSBR).

25. Lauffläche nach einem der Ansprüche 22 bis 24, wobei der SBR in einer Mischung mit einem BR-Elastomer verwendet wird.

26. Lauffläche nach Anspruch 25, wobei das BR-Elastomer über 90% cis-1,4-Bindungen besitzt.

27. Lauffläche nach einem der Ansprüche 1 bis 26, **dadurch gekennzeichnet, dass** sie sich im vulkanisierten Zustand befindet.

28. Verfahren zur Herstellung einer mit Schwefel vulkanisierbaren Reifenlauffläche, die einen verbesserten Kompromiss von Leistungsmerkmalen (Verschleißfestigkeit/Rollwiderstand/Haftung) aufweist, auf der Basis mindestens eines Dienelastomers, eines verstärkenden anorganischen Füllstoffes und eines Vulkanisationssystems, wobei dieses Verfahren die folgenden Schritte umfasst (pce = Gewichtsanteile auf hundert Anteile Dienelastomer):
• Zugeben zu einem Dienelastomer, im Verlaufe einer ersten, so genannten "nichtproduktiven" Phase, von mindestens:
• als einem verstärkenden anorganischen Füllstoff, über 80 pce eines Siliciumdioxids, das die folgenden Merkmale aufweist:
(a) eine spezifische BET-Oberfläche, die kleiner als 130 m²/g ist;
(b) eine mittlere Teilchengröße d_{w}, die zwischen 30 und 300 nm liegt;
• einem Kupplungsmittel, das die Bindung zwischen dem Siliciumdioxid und dem Dienelastomer gewährleistet;
• als Vulkanisationsaktivator, zwischen 0,5 und 1,5 pce Zink;
• unter thermomechanischem Mischen des Ganzen, ein oder mehrere Male, bis eine maximale Temperatur erreicht ist, die zwischen 110°C und 190°C liegt;
• Abkühlen des Ganzen auf eine Temperatur unter 100°C;
• anschließendes Zugeben, im Verlaufe einer zweiten, so genannten "produktiven" Phase, des Schwefels und eines Vulkanisationsbeschleunigers;
• Mischen des Ganzen bis zu einer maximalen Temperatur unter 110°C;
• Kalandrieren oder Extrudieren der so erhaltenen elastomeren Zusammensetzung in der Form einer Reifenlauffläche.

29. Verfahren nach Anspruch 28, **dadurch gekennzeichnet, dass** die gesamte Menge an Zink oder ein Teil davon im Verlaufe der produktiven Phase zugegeben wird, statt im Verlaufe der nichtproduktiven Phase zugegeben zu werden.

30. Verfahren nach Anspruch 28 oder 29, wobei das Dienelastomer mindestens 50 pce eines Butadien-Elastomers enthält.

31. Verfahren nach Anspruch 30, wobei das Butadien-Elastomer aus den Polybutadienen (BR), den StyrolButadien-Copolymeren (SBR) und den Mischungen dieser Elastomere ausgewählt ist.

32. Verfahren nach einem der Ansprüche 28 bis 31, wobei der Anteil von Siliciumdioxid größer als 90 pce ist.

33. Verfahren nach Anspruch 32, wobei der Anteil von Siliciumdioxid zwischen 90 pce und 150 pce liegt.

34. Verfahren nach einem der Ansprüche 28 bis 33, wobei der Beschleuniger ein Sulfenamid-Beschleuniger ist und der Gesamtanteil von Schwefel und von Sulfenamid-Beschleuniger zwischen 1,25 pce und 2,75 pce liegt.

35. Verfahren nach Anspruch 34, wobei der Gesamtanteil von Schwefel und von Sulfenamid-Beschleuniger in einem Bereich von 1,5 bis 2,5 pce liegt.

36. Verfahren nach einem der Ansprüche 28 bis 35, wobei außerdem ein Guanidinderivat zugegeben wird, wobei der Gesamtanteil von Schwefel, von Sulfenamid und von Guanidinderivat in einem Bereich von 1,75 bis 4,25 pce liegt.

37. Verfahren nach Anspruch 36, wobei das Guanidinderivat im Verlaufe der nichtproduktiven Phase zugegeben wird.

38. Verfahren nach Anspruch 37 , wobei das Guanidinderivat DPG (Diphenylguanidin) ist.

39. Verfahren nach einem der Ansprüche 28 bis 38, wobei das Zink in Form von Zinkoxid zugeführt wird, vorzugsweise in Gegenwart einer Fettsäure.

40. Verfahren nach Anspruch 39, wobei die Fettsäure Stearinsäure ist, die einen bevorzugten Anteil von 0,5 bis 3 pce aufweist.

41. Verfahren nach einem der Ansprüche 28 bis 40, wobei die Menge an Zink in einem Bereich von 0,7 bis 1,3 pce liegt.

42. Verfahren nach einem der Ansprüche 28 bis 41, wobei das Kupplungsmittel aus den polyfunktionalen Silanen und Polysiloxanen ausgewählt ist.

43. Verfahren nach Anspruch 42, wobei das Kupplungsmittel ein polysulfuriertes Alkoxysilan ist.

44. Verfahren nach Anspruch 43, wobei die Menge an polysulfuriertem Alkoxysilan kleiner als 6 pce ist.

45. Verfahren nach einem der Ansprüche 28 bis 44, wobei außerdem im Verlaufe der nichtproduktiven Phase Ruß zugegeben wird.

46. Verfahren nach Anspruch 45, wobei der Anteil von Ruß in einem Bereich von 5 bis 15 pce liegt.

47. Verfahren nach einem der Ansprüche 28 bis 46, wobei das Siliciumdioxid mindestens eines der folgenden Merkmale aufweist:
- eine BET-Oberfläche, die zwischen 70 und 130 m²/g liegt;
- eine Teilchengröße d_{w}, die zwischen 50 und 200 nm liegt;
- eine Desagglomerationsgeschwindigkeit α, die größer als 5_{.}10⁻³ µm⁻¹/min ist.

48. Verfahren nach Anspruch 47, wobei das Siliciumdioxid mindestens eines der folgenden Merkmale aufweist:
- eine BET-Oberfläche, die zwischen 100 und 125 m²/g liegt;
- eine Teilchengröße d_{w}, die in einem Bereich von 100 bis 150 nm liegt;
- eine Desagglomerationsgeschwindigkeit α, die größer als 1.10⁻² µm⁻¹/min ist.

49. Verfahren nach Anspruch 48, wobei das Siliciumdioxid die Gesamtheit der folgenden Merkmale aufweist:
- eine BET-Oberfläche, die in einem Bereich von 100 und 125 m²/g liegt;
- eine Teilchengröße d_{w}, die in einem Bereich von 100 bis 150 nm liegt;
- eine Desagglomerationsgeschwindigkeit α, die größer als 1.10⁻² µm⁻¹/min ist.

50. Verwendung einer Lauffläche nach einem der Ansprüche 1 bis 27 zur Herstellung oder Runderneuerung von Reifen.

51. Reifen, der eine Lauffläche nach einem der Ansprüche 1 bis 27 aufweist.
